# EUROPÄISCHE PATENTANMELDUNG

(11) **EP 1 538 372 A2**
(43) Veröffentlichungstag der Anmeldung: **08.06.2005**
(21) Anmeldenummer: 04400061.0
(22) Anmeldetag: 29.11.2004
(51) Int. Cl.: F16H 61/28

(54) **Getriebebetätigungsmechanismus**

(30) Priorität: 04.12.2003 DE 10356749; 13.02.2004 DE 102004007212
(71) Anmelder: ZF FRIEDRICHSHAFEN AG, 88046 Friedrichshafen (DE)
(72) Erfinder: Flückiger, Martin, 97421 Schweinfurt (DE); Franz, Viktor, 97421 Schweinfuhrt (DE); Müller, Matthias, 97520 Röthlein (DE); Markow, Alexander, 96047 Bamberg (DE)

(57) **Zusammenfassung**

Ein Getriebebetätigungsmechanismus umfasst ein zur Durchführung von Schaltvorgängen in einem Rotationsbewegungsmodus und einem Linearverschiebebewegungsmodus bewegbares erstes Schaltorgan (50a),eine Mehrzahl von zum Einlegen/Auslegen von Gängen bewegbaren zweiten Schaltorganen ,an dem ersten Schaltorgan (50a) einen ersten Wechselwirkungsbereich (26a), an jedem zweiten Schaltorgan einen zweiten Wechselwirkungsbereich (28a), wobei durch Bewegen des ersten Schaltorgans (50a) in einem ersten Bewegungsmodus von Rotationsbewegungsmodus und Linearverschiebebewegungsmodus der erste Wechselwirkungsbereich (26a) des ersten Schaltorgans (50a) in eine zur Mitnahmewechselwirkung bereite Wechselwirkungsstellung mit einem der zweiten Wechselwirkungsbereiche (28a) der zweiten Schaltorgane bringbar ist und wobei bei Bewegung des ersten Schaltorgans (50a) in einem zweiten Bewegungsmodus von Rotationsbewegungsmodus und Linearverschiebebewegungsmodus bei hergestellter Wechselwirkungsstellung der erste Wechselwirkungsbereich (26a) des ersten Schaltorgans (50a) den mit diesem in der Wechselwirkungsstellung sich befindenden zweiten Wechselwirkungsbereich (28a) eines zweiten Schaltorgans beaufschlagt, um dieses zweite Schaltorgan zum Einlegen/Auslegen eines Ganges zu bewegen, wobei nach erfolgter Bewegung des ersten Schaltorgans (50a) im zweiten Bewegungsmodus und dabei hervorgerufener Bewegung eines zweiten Schaltorgans das erste Schaltorgan (50a) im Wesentlichen ohne vorherige Zurückbewegung im zweiten Bewegungsmodus im ersten Bewegungsmodus bewegbar ist, um den ersten Wechselwirkungsbereich (26a) des ersten Schaltorgans (50a) in eine Wechselwirkungsstellung mit dem zweiten Wechselwirkungsbereich (28a) eines anderen zweiten Schaltorgans zu bringen.

## Beschreibung

Die vorliegende Erfindung betrifft einen Getriebebetätigungsmechanismus, wie er zur automatisierten Betätigung von Fahrzeugschaltgetrieben eingesetzt werden kann.

Bei derartigen automatisiert zu betätigenden Schaltgetrieben werden die im Allgemeinen in derartigen Getrieben vorhandenen Synchronisiervorrichtungen, die zum Einlegen bzw. Auslegen von Gängen zu aktivieren sind, durch die Wechselwirkung verschiedener Schaltorgane betätigt. Ein erstes dieser Schaltorgane, das beispielsweise als durch einen Aktuator zu betätigende Schaltwelle ausgebildet sein kann, kann in Betätigungswechselwirkung mit verschiedenen zweiten Schaltorganen gebracht werden, die beispielsweise als Schaltstangen ausgebildet sein können und mit den bereits angesprochenen Synchronisiervorrichtungen dann zusammenwirken können. Durch Auswählen und Bewegen von einer der Schaltstangen vermittels der Schaltwelle können dann die dieser Schaltstange zugeordneten Synchronisiervorrichtungen betätigt und somit Gänge ein- und ausgelegt werden. Die Auswahl einer der Schaltstangen und die Betätigung derselben erfolgt im Allgemeinen durch Rotation und Linearverschiebung der Schaltwelle. Je nach konstruktivem Aufbau kann die Auswahl durch Rotation und die Betätigung durch Verschiebung erfolgen, oder die Auswahl kann durch Linearverschiebung und die Betätigung durch Rotation erfolgen.

In modernen Antriebssystemen finden immer mehr so genannte Doppelkupplungsgetriebe oder Doppelgetriebe Einsatz. Diese Getriebe weisen zwei Getriebeeingangswellen auf. Jede dieser Getriebeeingangswellen kann über mehrere wahlweise aktivierbare Zahnradzüge in Drehmomentübertragungsverbindung mit einer Getriebeausgangswelle gebracht werden.

Durch derartige Getriebe lassen sich wesentlich schnellere Schaltvorgänge auch unter Last realisieren, da so vorgegangen werden kann, dass bei einer momentan nicht im Drehmomentübertragungsweg liegenden Getriebeeingangswelle bereits ein Zahnradzug, der wahrscheinlich als nächster Zahnradzug in den Drehmomentübertragungsweg zu schalten ist, bereits antizipierend aktiviert wird, d.h. an diese Getriebeeingangswelle durch die zugeordnete Synchronisiervorrichtung fest angekoppelt wird, wobei jedoch diese Getriebeeingangswelle über eine ihr zugeordnete Kupplung noch von einer Antriebswelle abgekoppelt ist. Der eigentliche Schaltvorgang umfasst dann lediglich die Drehmomentverbindungsübergabe von einer Kupplung zur anderen.

Derartige Doppelkupplungsgetriebe können also allgemein in zwei Getriebebereiche unterteilt werden, wobei jeder der Getriebebereiche eine der Getriebeeingangswellen mit dem zugeordneten Mechanismus zum Betätigen der in Verbindung mit dieser Getriebeeingangswelle vorgesehenen Synchronisiervorrichtungen und somit zu Aktivieren bzw. Deaktivieren von Drehmomentübertragungswegen umfasst.

Es ist das Ziel der vorliegenden Erfindung, einen Getriebebetätigungsmechanismus vorzusehen, der insbesondere beim Einsatz in Doppelkupplungsgetrieben das schnelle, gleichwohl aber zuverlässige Aktivieren bzw. Deaktivieren von Drehmomentübertragungswegen ermöglicht.

Erfindungsgemäß wird diese Aufgabe gelöst durch einen Getriebebetätigungsmechanismus, umfassend ein zur Durchführung von Schaltvorgängen in einem Rotationsbewegungsmodus und einem Linearverschiebebewegungsmodus bewegbares erstes Schaltorgan, eine Mehrzahl von zum Einlegen/Auslegen von Gängen bewegbaren zweiten Schaltorganen, an dem ersten Schaltorgan einen ersten Wechselwirkungsbereich, an jedem zweiten Schaltorgan einen zweiten Wechselwirkungsbereich, wobei durch Bewegen des ersten Schaltorgans in einem ersten Bewegungsmodus von Rotationsbewegungsmodus und Linearverschiebebewegungsmodus der erste Wechselwirkungsbereich des ersten Schaltorgans in eine zur Mitnahmewechselwirkung bereite Wechselwirkungsstelluhg mit einem der zweiten Wechselwirkungsbereiche der zweiten Schaltorgane bringbar ist und wobei bei Bewegung des ersten Schaltorgans in einem zweiten Bewegungsmodus von Rotationsbewegungsmodus und Linearverschiebebewegungsmodus bei hergestellter Wechselwirkungsstellung der erste Wechselwirkungsbereich des ersten Schaltorgans den mit diesem in der Wechselwirkungsstellung sich befindenden zweiten Wechselwirkungsbereich eines zweiten Schaltorgans beaufschlagt, um dieses zweite Schaltorgan zum Einlegen/Auslegen eines Ganges zu bewegen, wobei nach erfolgter Bewegung des ersten Schaltorgans im zweiten Bewegungsmodus und dabei hervorgerufener Bewegung eines zweiten Schaltorgans das erste Schaltorgan im Wesentlichen ohne vorherige Zurückbewegung im zweiten Bewegungsmodus im ersten Bewegungsmodus bewegbar ist, um den ersten Wechselwirkungsbereich des ersten Schaltorgans in eine Wechselwirkungsstellung mit dem zweiten Wechselwirkungsbereich eines anderen zweiten Schaltorgans zu bringen.

Gemäß der vorliegenden Erfindung sind also die verschiedenen Wechselwirkungsbereiche so aufeinander abgestimmt, dass dann, wenn ein zweiter Wechselwirkungsbereich in der Wechselwirkungsstellung zum ersten Wechselwirkungsbereich steht, ein Schalt- bzw. Stellvorgang durchgeführt werden kann, also das zugeordnete zweite Schaltorgan zusammen mit dem ersten Schaltorgan in eine Stellung bewegt werden kann, in welcher dann das erste Schaltorgan unmittelbar in eine Wechselwirkungsstellung zu dem zweiten Wechselwirkungsbereich eines anderen zweiten Schaltorgans gebracht werden kann. Es ist nicht erforderlich, irgendwelche Rückbewegungen in Ausgangsstellungen auszulösen, um bei nach wie vor verstelltem zweiten Schaltorgan dann das erste Schaltorgan wieder so zu bewegen, dass es auch auf ein weiteres zweites Schaltorgan einwirken kann. Dies führt dazu, dass bei dem erfindungsgemäßen Mechanismus die tatsächlich durchzuführenden Stellbewegungen des ersten Schaltorgans auf ein Minimum reduziert werden können. Dies reduziert die Gefahr von Fehlbedienungen bzw. Fehlbewegungen und beschleunigt die durchzuführenden Stellvorgänge bzw. die Übergänge zwischen den einzelnen Wechselwirkungsstellungen mit verschiedenen zweiten Wechselwirkungsbereichen erheblich.

Um eine stabile und sichere Wechselwirkung zwischen den verschiedenen Wechselwirkungsbereichen erlangen zu können, wird vorgeschlagen, dass der erste Wechselwirkungsbereich eine erste Verzahnungsformation aufweist, dass jeder zweite Wechselwirkungsbsereich eine zweite Verzahnungsformation aufweist, wobei durch Bewegen des ersten Schaltorgans im ersten Bewegungsmodus die erste Verzahnungsformation des ersten Wechselwirkungsbereichs in Mitnahmeeingriff mit der zweiten Verzahnungsformation von einem der zweiten Wechselwirkungsbereiche bringbar ist. Dabei kann beispielsweise vorgesehen sein, dass die erste Verzahnungsformation wenigstens einen Verzahnungsvorsprung oder/und wenigstens eine Verzahnungsaussparung aufweist, bzw. dass die erste Verzahnungsformation wenigstens einen Verzahnungsvorsprung oder/und wenigstens eine Verzahnungsaussparung aufweist.

Die gemäß den Prinzipien der vorliegenden Erfindung erlangbare Reduzierung der durchzuführenden Stellbewegungen kann bei der Betätigung eines Getriebes bzw. der in einem Getriebe vorgesehenen Synchronisiervorrichtungen in besonders zuverlässiger Weise dadurch erlangt werden, dass jedes der zweiten Schaltorgane in eine Mehrzahl von Schaltstellungen, vorzugsweise drei Schaltstellungen, bringbar ist, wobei unabhängig davon, in welcher der Schaltstellungen die verschiedenen zweiten Schaltorgane positioniert sind, das erste Schaltorgan im ersten Bewegungsmodus bewegbar ist, um die Wechselwirkungsstellung des ersten Wechselwirkungsbereichs mit einem der zweiten Wechselwirkungsbereiche herzustellen. Hier kann beispielsweise vorgesehen sein, dass jeder zweite Wechselwirkungsbereich eine Mehrzahl von in der Bewegungsrichtung der zweiten Schaltorgane aufeinander folgenden Eingriffsaussparungen aufweist, und dass unabhängig von den Schaltstellungen der zweiten Schaltorgane die zweiten Wechselwirkungsbereiche so bezüglich einander positioniert sind, dass bei Bewegung des ersten Schaltorgans im ersten Bewegungsmodus der daran vorgesehene wenigstens eine Verzahnungsvorsprung sich durch in seiner Bewegungsrichtung positionierte Verzahnungsaussparungen der zweiten Wechselwirkungsbereiche hindurch bewegen kann.

Bei einer baulich besonders einfach zu realisierenden Ausgestaltungsform kann vorgesehen sein, dass das erste Schaltorgan eine im ersten Bewegungsmodus in Rotation zu bewegende und im zweiten Bewegungsmodus in Linearverschiebung zu bewegende Schaltwelle umfasst. Es sei hier darauf hingewiesen, dass die beim ersten Schaltorgan auszulösenden Bewegungen durch herkömmliche Aktuatoren, die beispielsweise mit Elektromotoren arbeiten, erzeugt werden können. Bei einer derartigen Ausgestaltung des ersten Schaltorgans kann weiter vorgesehen sein, dass die zweiten Schaltorgane jeweils eine in Linearverschiebung zu bewegende und dabei mit wenigstens einer Synchronisiervorrichtung zum Auslegen/Einlegen eines Gangs zusammenwirkende Schaltstange umfassen.

Bei einer alternativen Ausgestaltungsform kann der erfindungsgemäße Mechanismus so ausgestaltet sein, dass das erste Schaltorgan ein im ersten Bewegungsmodus in Linearverschiebung zu bewegendes und im zweiten Bewegungsmodus in Rotation zu bewegendes Schaltrad umfasst. Dabei kann dann die Bewegung des ersten Schaltorgans dadurch weitergeleitet werden, dass die zweiten Schaltorgane jeweils ein in Rotation zu bewegendes und dabei mit wenigstens einer Synchronisiervorrichtung zum Auslegen/Einlegen eines Gangs zusammenwirkendes Schwenkelement umfassen.

Um bei dieser Variante die Bewegung des Schaltrads in den verschiedenen Bewegungsmodi auslösen zu können, wird vorgeschlagen, dass das Schaltrad auf einer zur Drehung antreibbaren Übertragungswelle linear verschiebbar, mit dieser zur gemeinsamen Drehung gekoppelt angeordnet ist, wobei ein erster Antrieb zum Drehen der Übertragungswelle vorgesehen ist und ein zweiter Antrieb zum Verschieben des Schaltrads auf der Übertragungswelle vorgesehen ist.

Da bei derartigen Getriebebetätigungsmechanismen bzw. Getrieben der Fall auftreten kann, dass ein bereits eingelegter Gang durch äußere Einflüsse oder unkorrektes Einlegen wieder herausspringt und dabei ein zweites Schaltorgan eine Stellung einnehmen kann, die keiner der dafür vorgesehenen Schaltstellungen entspricht, könnte eine Situation auftreten, in der eine korrekte Wechselwirkung des ersten Schaltorgans mit diesem zweiten Schaltorgan nicht mehr durchführbar ist.

Um diesem Problem entgegenzutreten, kann gemäß einem weiteren Aspekt der vorliegenden Erfindung eine Rückstellanordnung vorgesehen sein zum Sicherstellen, dass wenigstens ein Teil der zweiten Schaltorgane in einer jeweiligen vorbestimmten Schaltstellung ist. Mit einer derartigen Rückstellanordnung kann also dafür gesorgt werden, dass durch Zusammenwirken derselben mit zweiten Schaltorganen diese, sofern sie nicht in einer vorbestimmten Schaltstellung sind, in diese gelangen, so dass auch dann, wenn nicht sensorisch erfasst werden kann, in welcher Schaltstellung verschiedene der zweiten Schaltorgane oder alle zweiten Schaltorgane sind, nach Betätigen der Rückstellanordnung wieder ein definierter Zustand vorliegt, von dem ausgehend dann wieder normale Betätigungsvorgänge bzw.

Stellvorgänge erfolgen können. Dabei kann beispielsweise vorgesehen sein, dass die Rückstellanordnung ein zur Durchführung einer Rückstellbewegung bewegbares Rückstellelement umfasst, bei welcher Rückstellbewegung wenigstens ein Teil derjenigen zweiten Schaltorgane, die nicht in der für diese jeweils vorbestimmten Schaltstellung sind, in die jeweils vorbestimmte Schaltstellung bewegt wird.

Vor allem dann, wenn bei dem erfindungsgemäßen Getriebebetätigungsmechanismus nicht alle zweiten Schaltorgane im gleichen räumlichen Bereich vorgesehen sind bzw. im Verlaufe einer einzigen Bewegung durch das Rückstellelement erfassbar sind, kann vorgesehen sein, dass das Rückstellelement zur Durchführung einer ersten Rückstellbewegung bewegbar ist, bei welcher von einer ersten Gruppe von zweiten Schaltorganen diejenigen, die nicht in der für diese jeweils vorbestimmten Schaltstellung sind, in die jeweils vorbestimmte Schaltstellung bewegt werden, und zur Durchführung einer zweiten Rückstellbewegung bewegbar ist, bei welcher von einer zweiten Gruppe von zweiten Schaltorganen diejenigen, die nicht in der für diese jeweils vorbestimmten Schaltstellung sind, in die jeweils vorbestimmte Schaltstellung bewegt werden.

Die zweiten Schaltorgane sind zur Durchführung von Schaltvorgängen im Allgemeinen in zwei Richtungen bewegbar. Da bei undefinierter Positionierung grundsätzlich nicht bekannt sein wird, in welcher Bewegungsrichtung ausgehend von der vorbestimmten Schaltstellung ein derartiges zweites Schaltorgan bewegt ist bzw. verstellt ist, wird weiter vorgeschlagen, dass das Rückstellelement einen ersten Rückstellbereich aufweist, welcher bei Durchführung einer Rückstellbewegung die in einer ersten Richtung aus ihrer jeweiligen vorbestimmten Schaltstellung heraus bewegten zweiten Schaltorgane in die jeweils vorbestimmte Schaltstellung zurück bewegt, und einen zweiten Rückstellbereich aufweist, welcher bei Durchführung derselben Rückstellbewegung die in einer zweiten Richtung aus ihrer jeweiligen vorbestimmten Schaltstellung heraus bewegten zweiten Schaltorgane in die jeweils vorbestimmte Schaltstellung zurück bewegt. Auf diese Art und Weise kann im Verlaufe einer einzigen Bewegung auf in verschiedene Richtungen ggf. verstellte Schaltorgane eingewirkt werden, um diese jeweils dann in Richtung zu ihrer vorbestimmten Schaltstellung zu bewegen.

Um das Rückstellelement zur Durchführung einer Rückstellbewegung anzutreiben, wird vorgeschlagen, dass an dem ersten Schaltorgan wenigstens ein erster Kopplungsbereich vorgesehen ist, dass an dem Rückstellelement wenigstens ein zweiter Kopplungsbereich vorgesehen ist, dass das erste Schaltorgan in wenigstens einer Kopplungsstellung positionierbar ist, in welcher ein erster Kopplungsbereich in Kopplungseingriff mit einem zweiten Kopplungsbereich steht und eine Bewegungskopplung zwischen dem ersten Schaltorgan und dem Rückstellelement hergestellt ist. Hierzu ist es beispielsweise möglich, dass das erste Schaltorgan durch Bewegen im ersten Bewegungsmodus in eine Kopplungsstellung bewegbar ist, wobei bei in einer Kopplungsstellung positioniertem ersten Schaltorgan dieses nicht in einer Wechselwirkungsstellung ist, und dass bei Bewegen des in einer Kopplungsstellung positionierten ersten Schaltorgans im zweiten Bewegungsmodus das Rückstellelement zur Durchführung einer Rückstellbewegung bewegt wird.

Das Rückstellelement kann beispielsweise zur Durchführung einer Rückstellbewegung um eine Drehachse einer Übertragungswelle verschwenkbar sein und zum Einwirken auf in verschiedene Richtungen verstellte und als Schwenkelemente ausgestaltete zweite Schaltorgane kann weiter vorgesehen sein, dass bei Durchführung einer Rückstellbewegung der erste Rückstellbereich des Rückstellelements mit einem ersten Hebelabschnitt von Schwenkelementen zusammenwirkt und der zweite Rückstellbereich mit einem zweiten Hebelabschnitt derselben zusammenwirkt.

Wenn vorgesehen ist, dass die zweiten Schaltorgane in einer Mehrzahl von Schaltstellungen positionierbar sind, von welchen eine Schaltstellung einer Neutralstellung einer durch ein jeweiliges zweites Schaltorgan zu betätigenden Getriebesynchronisiervorrichtung entspricht, und dass die vorbestimmte Schaltstellung die eine Schaltstellung ist, wird durch Durchführung eines Rückstellvorgangs bzw. einer Rückstellbewegung eine sehr hohe Sicherheit dahingehend erlangt, dass am Ende eines Rückstellvorgangs bei den von der Rückstellanordnung erfassbaren zweiten Schaltorganen kein Gang eingelegt ist und somit eine undefinierte oder ungewollte Bewegung eines Fahrzeugs nicht auftreten kann.

Um dem Problem einer undefinierten Positionierung eines zweiten Schaltorgans entgegen zu treten, ist gemäß einem weiteren Aspekt der vorliegenden Erfindung ferner ein Verfahren zur Beseitigung einer Fehlpositionierung eines zweiten Schaltorgans bei einem erfindungsgemäßen Getriebebetätigungsmechanismus vorgesehen, umfassend die folgenden Maßnahmen:
- a): Bewegen des ersten Schaltorgans im ersten Bewegungsmodus in eine Stellung, in welcher der erste Wechselwirkungsbereich mit keinem der zweiten Wechselwirkungsbereiche in einer Wechselwirkungsstellung ist;
- b): Bewegen des ersten Schaltorgans im zweiten Bewegungsmodus in eine Stellung, in welcher ein darauf folgendes Bewegen des ersten Schaltorgans im ersten Bewegungsmodus in eine Behelfs-Wechselwirkungsstellung möglich ist, in welcher Behelfs-Wechselwirkungsstellung der erste Wechselwirkungsbereich bei nachfolgendem Bewegen im zweiten Bewegungsmodus an dem fehlpositionierten zweiten Schaltorgan oder/und dem zweiten Wechselwirkungsbereich desselben angreifen kann;
- c): Bewegen des ersten Schaltorgans im ersten Bewegungsmodus in die Behelfs-Wechselwirkungsstellung;
- d): Bewegen des ersten Schaltorgans im zweiten Bewegungsmodus und dabei Bewegen des fehlpositionierten zweiten Schaltorgans.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: in prinzipieller Darstellung ein Getriebe, bei welchem der erfindungsgemäße Betätigungsmechanismus vorgesehen werden kann;
- Fig. 2: eine perspektivische Ansicht der wesentlichen Komponenten des erfindungsgemäßen Mechanismus gemäß einer ersten Ausgestaltungsvariante;
- Fig. 3: einen bei der in Fig. 2 dargestellten Variante vorgesehenen ersten Wechselwirkungsbereich in vergrößerter Perspektivdarstellung;
- Fig. 4: einen bei der in Fig. 2 dargestellten Variante vorgesehenen zweiten Wechselwirkungsbereich in vergrößerter Perspektivdarstellung;
- Fig. 5: in ihren Diagrammen a) - j) verschiedene Stellzustände des in den Fig. 1 - 4 gezeigten Mechanismus;
- Fig. 6: eine Seitenansicht eines weiteren erfindungsgemäßen Getriebebetätigungsmechanismus gemäß einer alternativen Ausgestaltungsvariante;
- Fig. 7: den in Fig. 6 gezeigten Mechanismus in perspektivischer Darstellung;
- Fig. 8: eine Stirnansicht des in den Fig. 6 und 7 gezeigten Mechanismus;
- Fig. 9: eine der Fig. 8 entsprechende Ansicht des Mechanismus in Wechselwirkung mit durch diesen zu beaufschlagenden Schaltstangen;
- Fig. 10: eine perspektivische Teilansicht einer Weiterbildungsvariante des in den Fig. 6 gezeigten Getriebebetätigungsmechanismus;
- Fig. 11: eine der Fig. 10 entsprechende Ansicht in einem anderen Zustand des Getriebebetätigungsmechanismus;
- Fig. 12: eine Seitenansicht des in den Fig. 10 und 11 gezeigten Bereichs des Getriebebetätigungsmechanismus.

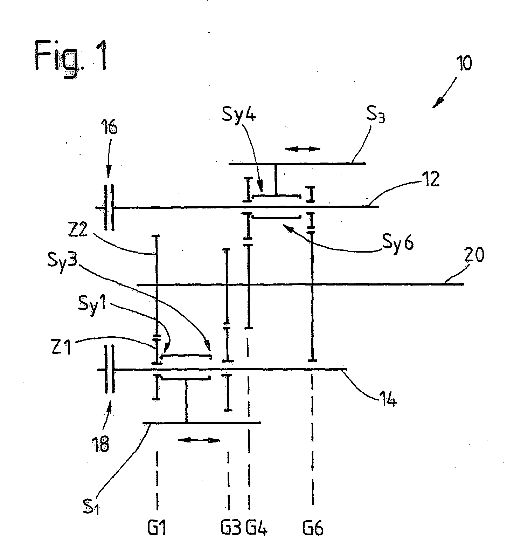

Bevor nachfolgend detailliert auf den konstruktiven Aufbau und die Funktionsweise eines erfindungsgemäßen Getriebebetätigungsmechanismus eingegangen wird, sei zunächst mit Bezug auf die Fig 1 der grundsätzliche Aufbau eines Getriebes 10, bei welchem ein derartiger Mechanismus zum Einsatz gelangen kann, erläutert.

Dieses Getriebe 10 weist zwei Getriebeeingangswellen 12, 14 auf. Jede dieser Getriebeeingangswellen 12, 14 kann durch eine ihr zugeordnete Kupplung 16, 18 in den Drehmomentübertragungsweg von einer nicht dargestellten Antriebswelle zu einer Getriebeausgangswelle 20 geschaltet werden.

Es sei bereits hier darauf hingewiesen, dass diese beiden Getriebeeingangswellen 12, 14 nicht notwendigerweise nebeneinander angeordnet sein müssen. Selbstverständlich können diese Wellen 12, 14 zueinander koaxial angeordnet sein, wobei die innere der Wellen dann über die äußere hinausragt, um einen zur Ankopplung an die Getriebeausgangswelle 20 freiliegenden Bereich dieser inneren Welle bereitzustellen. Die beiden Kupplungen 16, 18 können in diesem Falle dann jeweils Kupplungsbereiche einer so genannten Doppelkupplung sein.

Jeder der Getriebeeingangswellen 12, 14 sind mehrere Gänge, hier dargestellt die Gänge G1, G3 für die Getriebeeingangswelle 14 und G4, G6 für die Getriebeeingangswelle 12, zugeordnet. Durch Einlegen eines dieser Gänge kann die jeweilige Getriebeeingangswelle 12 oder 14 dann in Drehmomentübertragungsverbindung mit der Getriebeausgangswelle 20 gebracht werden. Jedem dieser Gänge G1, G3, G4, G6 ist eine hier nur schematisch dargestellte Synchronisiervorrichtung Sy1, Sy3, Sy4, Sy6 zugeordnet. Jeweils ein Paar dieser Synchronisiervorrichtungen, hier die Synchronisiervorrichtungen Sy1 und Sy3 bzw. Sy4 und Sy6 sind gemeinsam bedienbar durch eine zugeordnete Schaltstange S₁ bzw. S₃. Durch Verschiebung beispielsweise der Schaltstange S₁ in der Richtung des erkennbaren Pfeils kann die Synchronisiervorrichtung S1 aktiviert werden, um ein Zahnrad Z1 des ersten Gangs G1 drehfest an die Getriebeeingangswelle 14 anzukoppeln und somit über ein Zahnrad Z2 des ersten Gangs G1 eine drehfeste Kopplung zwischen den der Getriebeeingangswelle 14 und der Getriebeausgangswelle 20 herzustellen. Bei Zurückverschiebung der Schaltstange S₁ in entgegengesetzter Richtung kann die Synchronisiervorrichtung Sy1 deaktiviert werden, so dass beispielsweise keiner der Gänge G1, G3 eingelegt ist und stattdessen nur mehr der Gang G4 durch Aktivieren der Synchronisiervorrichtung Sy4 eingelegt ist und eine Drehmomentübertragungsverbindung zwischen der Getriebeeingangswelle 12 und der Getriebeausgangswelle 20 realisiert ist. Auf diese Art und Weise kann beispielsweise bei eingerückter Kupplung 18 und ausgerückter Kupplung 16 und momentan eingelegtem und aktivem ersten Gang bereits beispielsweise der 4. Gang (oder 2. Gang) an der Getriebeeingangswelle 12 eingelegt und vorbereitet werden, durch die ausgerückt gehaltene Kupplung 16 jedoch noch nicht in den Drehmomentübertragungsweg geschaltet werden.

Es ist selbstverständlich, dass derartige Getriebe 10 in Verbindung mit jeder der Getriebeeingangswellen 12, 14 nicht nur ein Paar von Gängen aufweist, sondern dass zum Erreichen der erforderlichen Vielzahl an Gangstufen beispielsweise in Verbindung mit jeder der Getriebeeingangswellen 12, 14 jeweils vier Gänge vorgesehen sind, wobei zwei dieser Gänge dann jeweils zu einer Gruppe zusammengefasst sind, die durch eine ihr zugeordnete Schaltstange zu bedienen ist. Das heißt, es wäre dann zu jedem Getriebebereich, also in Zuordnung zu jeder Getriebeeingangswelle 12, 14, jeweils ein Paar von Schaltstangen vorzusehen. So könnten beispielsweise in Verbindung mit der Getriebeeingangswelle 14 nicht nur der erste Gang und der dritte Gang, sondern auch der fünfte und der siebte Gang, diese Gänge zusammengefasst zu einem durch eine Schaltstange zu bedienenden Paar, vorgesehen sein. In Verbindung mit der Getriebeeingangswelle 12 könnten dann neben dem vierten und dem sechsten Gang auch der zweite Gang und der Rückwärtsgang, auch diese beiden Gänge zu einem Paar zusammengefasst, vorgesehen sein. Daraus ergibt sich also bei einem Getriebe mit maximal sieben Vorwärtsgängen und beispielsweise einem Rückwärtsgang eine Anordnung, bei welcher vier Schaltstangen in aufeinander abgestimmter Weise verstellt werden müssen, um in jedem der Getriebebereiche, also in Zuordnung zu jeder der Getriebeeingangswellen 12, 14, die Möglichkeit zu haben, einen dort vorgesehenen Gang einzulegen und in den Drehmomentübertragungsweg zu schalten bzw. vorzubereiten.

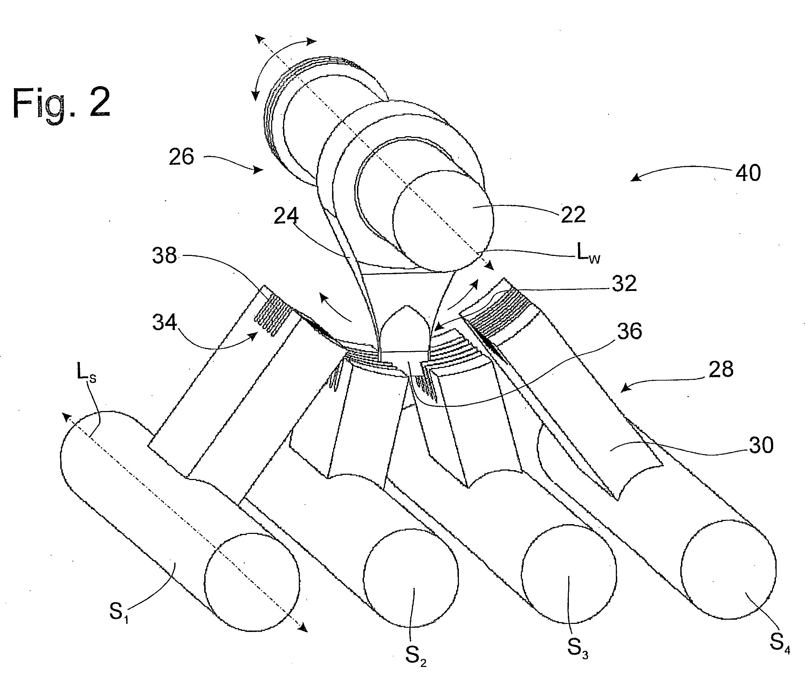

Ein Getriebebetätigungsmechanismus 40, der zur Durchführung derartiger Stellvorgänge bei einem so genannten Doppelkupplungsgetriebe 10, wie es in Fig. 1 gezeigt ist, in der Lage ist, wird nachfolgend mit Bezug auf die Fig. 2 - 5 detailliert beschrieben.

Man erkennt zunächst in Fig. 2 die hier bereits angesprochenen Schaltstangen S₁, S₂, S₃ und S₄, von welchen beispielsweise die Schaltstangen S₁ und S₃ den bereits mit Bezug auf die Fig. 1 beschriebenen entsprechen können und die Schaltstange S₂ zum Aktivieren bzw. Deaktivieren des siebten Gangs und des fünften Gangs vorgesehen sein kann, während die Schaltstange S₄ zum Aktivieren bzw. Deaktivieren des zweiten Gangs bzw. des Rückwärtsgangs vorgesehen sein kann. Jede dieser Schaltstangen S₁ - S₄ ist dann, wie in Fig. 1 angedeutet, zum Einlegen bzw. Auslegen eines ihr zugeordneten Gangs in Richtung ihrer Längsachse Lₛ verschiebbar.

Um diese Verschiebung erlangen zu können, ist eine Schaltwelle 22 vorgesehen. Auch diese Schaltwelle 22 ist in der Richtung ihrer Längsachse L_{w}, die im Allgemeinen parallel zu den Längsachsen Lₛ der Schaltstangen S₁ - S₄ angeordnet ist, verschiebbar und ist darüber hinaus um diese Längsachse L_{w} drehbar. Hierzu können im Stand der Technik bekannte und daher nicht weiter beschriebene Mechanismen eingesetzt werden, die in einem außerhalb oder auch innerhalb eines Getriebes anzuordnenden Aktuatormechanismus vorgesehen sein können.

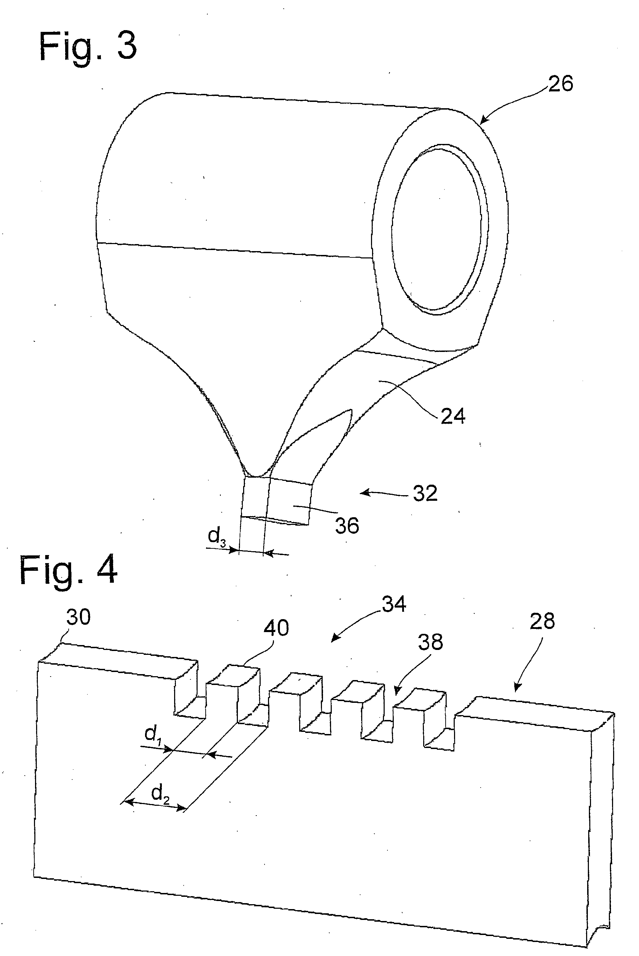

An der hier als erstes Schaltorgan wirksamen Schaltwelle 22 ist ein in Form eines Schaltfingers 24 ausgestalteter erster Wechselwirkungsbereich 26 vorgesehen. An den Schaltstangen S₁ - S₄ ist jeweils ein zweiter Wechselwirkungsbereich 28 in Form eines von diesen Schaltstangen seitlich abstehenden Mitnahmeelements 30 ausgestaltet. Der Aufbau des ersten Wechselwirkungsbereichs 26 bzw. des zweiten Wechselwirkungsbereichs 28, der im Wesentlichen für alle Schaltstangen S₁ - S₄ gleich ist, wird nachfolgend mit Bezug auf die Fig. 3 und 4 beschrieben. Man erkennt in den Fig. 3 und 4 zunächst, dass der erste Wechselwirkungsbereich 26, also im Wesentlichen der Schaltfinger 24, und der zweite Wechselwirkungsbereich 28 jeweilige Verzahnungsformationen 32 bzw. 34 aufweisen. Die Verzahnungsformation 32 des ersten Wechselwirkungsbereichs 26 umfasst im dargestellten Beispiel einen Verzahnungsvorsprung 36. Die Verzahnungsformation 34 des bzw. jedes zweiten Wechselwirkungsbereichs 28 umfasst in Richtung der Längsachse Lₛ und somit auch der Bewegungsrichtung der jeweiligen Schaltstangen S₁ - S₄ aufeinander folgend eine Mehrzahl von Verzahnungsaussparungen 38, diese jeweils getrennt durch Zähne bzw. Verzahnungsvorsprünge 40.

Man erkennt weiter in Fig. 4, dass die Dicke d₁ der Zähne bzw. Verzahnungsvorsprünge 40 - gemessen in der Bewegungsrichtung der jeweiligen Schaltstangen S₁ - S₄ - näherungsweise die Hälfte der Periode d₂ der Verzahnungsformation 34, also der Gesamterstreckung eines Zahns 40 und der unmittelbar darauf folgenden Verzahnungsaussparung 38 entspricht. Diese Periode d₂ der Verzahnungsformation 34 entspricht im dargestellten Falle weiterhin dem Bewegungshub, d.h. der Linearverschiebung einer jeweiligen Schaltstange S₁ - S₄ in Richtung der jeweiligen Längsachse Lₛ, der dazu erforderlich ist, bei eingelegtem Gang eine Synchronisiervorrichtung von dieser Stellung in eine Neutralstellung zu bewegen. Das heißt, das Doppelte der Verzahnungsperiode d₂ der Verzahnungsformation 38 entspricht beispielsweise bei dem in Fig. 1 dargestellten Getriebe dem Weg, der erforderlich ist, um vermittels der dort gezeigten Schaltstange S₁ den ersten Gang G1 auszulegen, sich über die Neutralstellung hinweg zu bewegen und dann den dritten Gang G3 einzulegen.

Die Dicke d₃ des Verzahnungsvorsprungs 36 - wiederum betrachtet in der Bewegungsrichtung desselben bzw. der Schaltstangen S₁ beim Betätigen einer jeweiligen Synchronisiervorrichtung - ist auf die Erstreckung der Verzahnungsaussparungen 38 in dieser Bewegungsrichtung abgestimmt und kann zum Vermeiden eines Totgangs idealerweise möglichst nahe an dieser Erstreckung der Verzahnungsaussparungen 38, welche als d₂ - d₁ ermittelt werden kann, sein. Um jedoch sicherzustellen, dass auch unter den allgemein zu erwartenden Fertigungstoleranzen und der ebenfalls vorhandenen Toleranz bei der Erlangung jeweiliger Stellungen der Schaltstangen S₁ - S₄ der Verzahnungsvorsprung 36 zuverlässig in eine jeweilige der Verzahnungsaussparungen 38 eintreten kann, kann die Dicke d₃ kleiner sein als die entsprechende Erstreckung der Verzahnungsaussparungen 38, kann beispielsweise im Bereich der Hälfte dieser Erstreckung liegen.

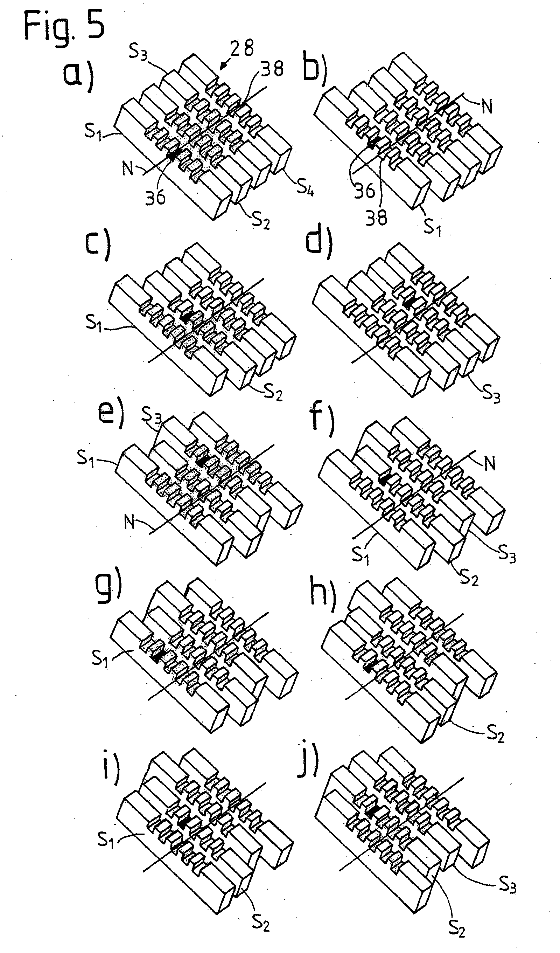

Nachfolgend wird mit Bezug auf die Fig. 2 - 4 die Funktionsweise dieses Getriebebetätigungsmechanismus beschrieben. Hierzu wird weiterhin auch Bezug genommen auf die Fig. 5, die in ihren verschiedenen Darstellungen a) - j) verschiedene Schalt- bzw. Aktivierungsstellungen zeigt.

Es sei zunächst im Stellzustand der Fig. 5 a) angenommen, dass alle Schaltstangen S₁ - S₄, in Fig. 5 repräsentiert durch die jeweiligen zweiten Kopplungsbereiche 28, in einer neutralen Stellung sind, d.h. einer Stellung, in der in Verbindung mit keiner der Getriebeeingangswellen ein Gang eingelegt ist. Dies ist daran erkennbar, dass die Verzahnungsformation 34 an den zweiten Kopplungsbereichen 28 mit ihrer in der Bewegungsrichtung der Schaltstangen S₁ - S₄ zentralen Verzahnungsaussparung 38 im Bereich einer fiktiven Neutral-Linie N positioniert sind. Das in der Verzahnungsaussparung 38 der Schaltstange S₁ erkennbare schwarze Feld repräsentiert in dieser Darstellung die Positionierung des Verzahnungsvorsprungs 36 des ersten Wechselwirkungsbereichs 26. In diesem Falle wäre also die erste Schaltstange S₁ ausgewählt, um beispielsweise den ersten Gang G1 einzulegen. Dies kann nunmehr dadurch erlangt werden, dass die Schaltwelle 22 zusammen mit dem daran vorgesehenen ersten Wechselwirkungsbereich 26, also auch dem Verzahnungsvorsprung 36, in Richtung ihrer Längsachse L_{w} bewegt wird, so dass nunmehr der in Fig. 5 b) erkennbare Zustand vorliegt. Die Schaltstange S₁ ist um eine Periode d₂ der Verzahnungsformation 34 verschoben, so dass nunmehr wieder eine Verzahnungsaussparung 38 dieser Schaltstange S₁ auf der Neutral-Linie N liegt, während diejenige Verzahnungsaussparung 38, in welche der Verzahnungsvorsprung 36 eingreift, um eine Periode d₂ bezüglich dieser Neutral-Linie N verschoben ist, quer zur Verschieberichtung der Schaltstange S₁ jedoch wieder ausgerichtet ist mit Verzahnungsaussparungen 38 der anderen Schaltstangen S₂ - S₄. In diesem Zustand ist also der erste Gang eingelegt, während in Verbindung mit der anderen Getriebeeingangswelle in diesem Zustand noch kein Gang eingelegt ist. Um dies zu erreichen, wird, wie in den Fig. 5 c) und 5 d) erkennbar, zunächst der Verzahnungsvorsprung 36 zusammen mit der Schaltwelle 22 in Rotation bewegt, so dass er beim Übergang vom Zustand der Fig. 5 b) zum Zustand 5 d) sich aus dem Eingriff mit der Verzahnungsformation 34 der Schaltstange S₁ über die Verzahnungsformation 34 der Schaltstange S₂ hinweg in den Bereich der Verzahnungsformation der Schaltstange S₃ bewegt. Im Zustand 5 d) ist also eine Wechselwirkungsstellung zwischen dem Verzahnungsvorsprung 36 und der Verzahnungsformation 34 der Schaltstange S₃ hergestellt. Um dies zu erlangen, konnte der Mitnahmevorsprung 34 durch die in seiner Wahl-Bewegungsrichtung zueinander ausgerichtet liegenden Aussparungen 38 der verschiedenen Verzahnungsformationen 34 der Schaltstangen S₁ - S₃ hinweg bzw, hindurch bewegen. Hierfür ist wesentlich, dass die Periode der Verzahnungsformationen 34 abgestimmt ist auf die zum Einlegen bzw. Auslegen eines Gangs aus der Neutralstellung heraus erforderliche Verschiebung der Schaltstangen, so dass in jeder der drei für diese Schaltstangen S₁ - S₄ einnehmbaren Schaltstellungen immer für den Verzahnungsvorsprung 36 die Möglichkeit gegeben ist, durch Rotation der Schaltwelle 22 sich in eine Verzahnungsaussparung 38 einer unmittelbar benachbarten Schaltstange bzw. aller Schaltstangen zu bewegen. Ist die in Fig. 5 d) erkennbare Wechselwirkungsstellung des Verzahnungsvorsprungs 36 mit der Verzahnungsformation 34 der Schaltstange S₃ realisiert, kann nunmehr durch Verschieben der Schaltwelle 22 in Richtung ihrer Längsachse L_{w} der Verzahnungsvorsprung 36 die Schaltstange S₃ verschieben, um somit beispielsweise den zweiten Gang einzulegen. Während dieses Vorgangs zum Einlegen eines Gangs kann ein Drehmoment über den ersten Gang übertragen werden. Ist der andere Gang eingelegt und soll ein Schaltvorgang vom ersten in diesen Gang vorgenommen werden, muss nunmehr lediglich ein Wechsel in der Drehmomentübertragung zwischen den beiden Kupplungen 18 und 16 stattfinden, so dass die Drehmomentübertragung über den weiterhin eingelegten ersten Gang aufgehoben wird, während nunmehr ein Drehmoment über den anderen Gang übertragen werden kann.

Während dieser Gang zur Drehmomentübertragung genutzt wird, kann dann der erste Gang ausgelegt werden. Dies ist im Übergang von der Fig. 5 e) zur Fig. 5 h) erkennbar. Bei diesem Übergang wird zunächst der Verzahnungsvorsprung 36 durch die in seiner Wahlrichtung, also Rotationsrichtung, ausgerichteten Verzahnungsaussparungen 38 der Schaltstange S₃, der Schaltstange S₂ und der Schaltstange S₁ hinweg bewegt bzw. in die Verzahnungsformation 34 der Schaltstange S₁ hinein bewegt, um dann diese Schaltstange S₁ bei hergestellter Wechselwirkungsstellung zurück zu verschieben, so dass auch diese Schaltstange S₁ bzw. der ihr zugeordnete Getriebeteil wieder in einer Neutralstellung ist. Um als Nächstes dann beispielsweise einen in Verbindung mit der Schaltstange S₂ einzulegenden Gang zu aktivieren, wird, wie im Übergang zur Fig. 5 i) erkennbar, der Verzahnungsvorsprung 36 aus seinem Wechselwirkungseingriff mit der Verzahnungsformation 34 der Schaltstange S₁ heraus und in eine Wechselwirkungsstellung bewegt, in welcher er mit der Verzahnungsformation 34 der Schaltstange S₂ in Mitnahmeeingriff steht. Durch nachheriges Verschieben der Schaltwelle 22 kann nunmehr eine Gangstufe aktiviert werden, die in Zuordnung zur Schaltstange S₂ vorgesehen ist. Bei dem in Fig. 5 j) dargestellten Zustand sind dann jeweils Gänge eingelegt, die durch Verschiebung der Schaltstangen S₂ und S₃ eingelegt werden können.

Die vorangehende Beschreibung zeigt, dass bei dem erfindungsgemäß ausgestalteten Getriebebetätigungsmechanismus 40 dafür gesorgt ist, dass auch bei der Bereitstellung einer Mehrzahl von zum Einlegen bzw. Auslegen von Gängen zu bewegenden Schaltstangen bzw. zweiten Schaltorganen die Möglichkeit besteht, dass immer dann, wenn eines dieser Schaltorgane betätigt worden ist, unmittelbar in den Bereich der anderen Schaltorgane gewechselt werden kann, um dort Betätigungsvorgänge vorzunehmen, ohne die zuletzt betätigte Schaltstange bzw. das zuletzt betätigte Schaltorgan wieder zurückstellen zu müssen oder in der Wechselwirkung zwischen dem ersten Betätigungsorgan mit dem zweiten Betätigungsorgan ein so großes Bewegungsspiel bereitzustellen, dass das erste Betätigungsorgan wieder in eine Ausgangsstellung zurückgebracht werden kann, ohne dabei zwangsweise auch das eben betätigte zweite Betätigungsorgan, also eine jeweilige Schaltstange, wieder mit zurück zu bewegen. Durch die erfindungsgemäß ausgestalteten Wechselwirkungsbereiche ist dafür gesorgt, dass erstens unabhängig von der jeweiligen Schaltstellung eines jeweiligen zweiten Betätigungsorgans und zweitens unabhängig von der momentanen Betätigungsstellung des ersten Schaltorgans der zu diesem Zeitpunkt vorhandene Eingriff zwischen dem ersten Wechselwirkungsbereich und dem zweiten Wechselwirkungsbereich durch unmittelbares Übergehen in einen Eingriff des ersten Wechselwirkungsbereichs mit dem zweiten Wechselwirkungsbereich eines anderen zweiten Schaltorgans aufgehoben werden kann. In der dargestellten Ausgestaltungsvariante wird dies dadurch erreicht, dass für alle möglichen Schaltstellungen der verschiedenen Schaltstangen durch eine Mehrzahl von durch jeweils in der Wahlrichtung des ersten Wechselwirkungsbereichs 26 aufeinander folgende Aussparungen 38 mehrere so genannte Schaltgassen generiert werden, die vom ersten Wechselwirkungsbereich 26, also dem Verzahnungsvorsprung 36 desselben, zur Auswahl von einer der Schaltstangen durchlaufen werden können.

Es sei hier darauf hingewiesen, dass selbstverständlich eine Abwandlung erfolgen kann, ohne von der grundsätzlichen Lehre abzuweichen. So können beispielsweise am ersten Wechselwirkungsbereich 26 mehrere Verzahnungsvorsprünge 36 vorgesehen sein, die gleichzeitig jeweils in mehrere der Verzahnungsaussparungen 38 eingreifen, um auf diese Art und Weise die Stabilität der Mitnahmekopplung zu erhöhen. Grundsätzlich ist es auch möglich, die Teilung der Verzahnungsformation 34 feiner zu gestalten, d.h. die Periode d₂ zu verkürzen, wobei jedoch darauf zu achten ist, dass immer ein ganzzahliges Vielfaches der Periode dem Hub eines jeweiligen zweiten Schaltorgans, also beispielsweise einer Schaltstange, zwischen der durch diese einzunehmenden Schaltstellungen entspricht. Bei einer weiteren Abwandlung wäre es grundsätzlich möglich, an den Schaltstangen als jeweilige Verzahnungsformation 34 nur einen einzigen Verzahnungsvorsprung vorzusehen, und stattdessen das beispielsweise in Fig. 4 erkennbare Element 30 als erster Wechselwirkungsbereich an der Schaltwelle 22 vorzusehen. Auch hierbei wird der Vorteil erreicht, dass unabhängig davon, in welcher Schaltstellung die verschiedenen Schaltstangen mit den jeweils dann daran getragenen Verzahnungsvorsprüngen sind, das Element 30 in der vorangehend angesprochenen Auswahlrichtung bewegt werden kann, also über die einzelnen zweiten Wechselwirkungsbereiche 28 hinweg bewegt werden kann, wobei dann die in diesen Wechselwirkungsbereichen liegenden einzelnen Verzahnungsvorsprünge durch verschiedene der am ersten Wechselwirkungsbereich 26 dann vorgesehenen Aussparungen hindurchtreten können.

Bei derartigen Getrieben, bei welchen die Gänge durch Betätigen von Synchronisiervorrichtungen eingelegt bzw. ausgelegt werden, kann es beispielsweise bei nicht korrekt eingelegtem Gang oder aufgrund massiver äußerer Einflüsse zu so genannten Gangspringern kommen. Das heißt, ein eigentlich eingelegter Gang bzw. die zugeordnete Synchronisiervorrichtung bewegt sich wieder in Richtung Ausrücken. Da dies eine unkontrollierte Bewegung ist, kann der Zustand auftreten, dass das zugeordnete zweite Schaltorgan, also im dargestellten Falle eine der Schaltstangen S₁ = S₄ ,nicht eine der an sich vorgesehenen Schaltstellungen einnimmt, in welcher für den Verzahnungsvorsprung 36 ein Durchgang durch die zueinander ausgerichteten Verzahnungsaussparungen 38 der verschiedenen Schaltstangen S₁- S₄ möglich ist. Vielmehr kann die Schaltstange in einer Positionierung zum Stillstand kommen, in welcher eine Fehlausrichtung der Verzahnungsaussparungen 38 derselben zu den anderen Verzahnungsaussparungen 38 vorhanden ist und daher der Verzahnungsvorsprung 36 nicht in Eingriff mit der Verzahnungsformation 34 dieser Schaltstange gebracht werden kann.

Um in einem solchen Falle, der durch Auseinanderlaufen der Eingangsdrehzahl und der Ausgangsdrehzahl des Getriebes bzw. eines betroffenen Ganges erkennbar wird, dafür zu sorgen, dass auch der Gang, der eigentlich eingelegt werden sollte, aber wieder herausgesprungen ist, wieder aktiviert werden kann, kann gemäß der vorliegenden Erfindung folgende Prozedur durchgeführt werden.

Es sei hierzu zunächst angenommen, dass in der Darstellung der Fig. 2 die ganz links positionierte Schaltstange S₁ in einen derartigen Fehler involviert ist und insofern durch Rotation der Schaltwelle 22 im Uhrzeigersinn es nicht mehr möglich ist, den Verzahnungsvorsprung 36 über die Verzahnungsformation 34 der Schaltstange S₂ hinaus und in Eingriff mit der Verzahnungsformation 34 der Schaltstange S₁ zu bewegen. Es wird in einem derartigen Falle dann zunächst die Schaltwelle 22, also das erste Schaltorgan, in ihrem ersten Bewegungsmodus, also demjenigen Bewegungsmodus, in welchem an sich eine der Schaltstangen S₁ - S₄ auszuwählen wäre, entgegengesetzt zu derjenigen Richtung bewegt, welche erforderlich wäre, um die dem Defekt unterliegende Schaltstange S₁ zu erfassen. Im dargestellten Beispiel würde also die Schaltwelle 22 im Gegenuhrzeigersinn gedreht werden, und zwar so lange, bis ihr erster Wechselwirkungsbereich 26, also der Verzahnungsvorsprung 36, außer Eingriff mit allen zweiten Wechselwirkungsbereichen 28 ist. Das heißt, die Schaltwelle 22 wird so lange im Uhrzeigersinn gedreht, bis der Verzahnungsvorsprung 36 auch über die Verzahnungsformation 34 der Schaltwelle S₄ hinaus verschwenkt ist. Ist der gegenseitige Abstand der zweiten Wechselwirkungsbereiche 28 in dieser Wahlrichtung, also in der Richtung des ersten Bewegungsmodus des ersten Wechselwirkungsbereichs 26, so groß, dass zwischen einzelnen der zweiten Wechselwirkungsbereiche 28 eine Zwischenstellung existiert, in welcher der erste Wechselwirkungsbereich 26 zu keinem der zweiten Wechselwirkungsbereiche 28 in Wechselwirkungsstellung steht, so kann auch diese Stellung angefahren werden.

Ist der Zustand erreicht, in dem zu keinem zweiten Wechselwirkungsbereich 28 eine Wechselwirkungsstellung besteht, wird nunmehr die Schaltwelle 22 als erstes Schaltorgan in ihrem zweiten Bewegungsmodus bewegt, also demjenigen Bewegungsmodus, der an sich vorliegt, wenn eine der Schaltstangen S₁ - S₄ zum Einlegen bzw. Auslegen eines Gangs verschoben werden soll. Da jedoch keine Wechselwirkung zu einer der Schaltstangen S₁ - S₄ besteht, bewegt sich die Schaltwelle 22 mit ihrem ersten Wechselwirkungsbereich 26 alleine, und diese Bewegung wird so lange fortgesetzt, bis auch in der Richtung dieses zweiten Bewegungsmodus der zweite Wechselwirkungsbereich 26 vollständig aus dem Einflussbereich der zweiten Wechselwirkungsbereiche 28 heraus bewegt ist. Im vorliegenden Falle heißt dies, dass der Verzahnungsvorsprung 36 so weit in Richtung der Längsachse L_{w} der Schaltwelle 22 bewegt wird, bis er außerhalb des axialen Erstreckungsbereichs der Mitnahmeelemente 30 ist. Die Richtung dieser axialen Bewegung kann beispielsweise die Richtung sein, die der zuvor erfolgten ungewollten Verschiebung der Schaltwelle S₁ entgegengesetzt ist. Auch ist es möglich, den zweiten Wechselwirkungsbereich 26 bei dieser Bewegung in derjenigen Richtung zu bewegen, die der Richtung entspricht, in welcher die Schaltwelle S₁ sich fehlerhafter Weise bewegt hat.

Nach dieser Bewegung im zweiten Bewegungsmodus wird nunmehr der zweite Wechselwirkungsbereich 26 bzw. die Schaltwelle 22 wieder im ersten Bewegungsmodus bewegt, um nunmehr den zweiten Wechselwirkungsbereich 26, d.h. den Verzahnungsvorsprung 36, in denjenigen Bereich zu bewegen, in dem auch der zweite Wechselwirkungsbereich 34 der fehlerhafter Weise bewegten Schaltstange S₁ positioniert ist. Es wird somit ein Zustand hergestellt, in welchem der erste Wechselwirkungsbereich 26 und der betroffene zweite Wechselwirkungsbereich 28 grundsätzlich wieder einander überlappen und somit in einer Behelfs-Wechselwirkungsstellung sind. Daraufhin wird die Schaltwelle 22 mit dem ersten Wechselwirkungsbereich 26 wieder im zweiten Bewegungsmodus bewegt, und zwar nunmehr in der entgegengesetzten Richtung, in welcher zuvor die Schaltwelle 22 aus dem Bereich der zweiten Wechselwirkungsbereiche 28 im zweiten Bewegungsmodus, also in Linearverschiebung, bewegt worden ist. Bei dieser Zurückbewegung greift nunmehr der erste Wechselwirkungsbereich 26 an dem Mitnahmeelement 30 der Schaltwelle S₁ , d.h. am axialen Ende des zweiten Wechselwirkungsbereichs 34 dieser Schaltstange S₁, an und nimmt die Schaltstange S₁ in axialer Richtung mit. Diese Mitnahme kann beispielsweise so lange fortgesetzt werden, bis der zuvor fehlerhafter Weise wieder ausgelegte oder herausgesprungene Gang wieder vollständig eingelegt ist, oder kann beispielsweise auch so lange fortgeführt werden, bis die Schaltstange S₁ in ihrer Neutralstellung ist. Dies wird davon abhängen, von welcher Seite her der Wechselwirkungsbereich 26 am zweiten Wechselwirkungsbereich 34 der Schaltstange S₁ angreift. Ist dann die Schaltstange S₁ wieder in einer der vorangehend angesprochenen Stellungen, oder einer anderen Referenzstellung, in welcher sichergestellt ist, dass die Verzahnungsaussparungen 38 derselben zumindest zum Teil wieder mit Verzahnungsaussparungen 38 der anderen Schaltstangen ausgerichtet sind, wird die Schaltwelle 22 wieder im ersten Bewegungsmodus bewegt, d.h. gedreht, um den Verzahnungsvorsprung 36 wieder aus demjenigen räumlichen Bereich heraus zu bewegen, in welchem er in Wechselwirkung mit den zweiten Wechselwirkungsbereichen, d.h. den Verzahnungsformationen 34, bewegt werden könnte. Daraufhin wird die Schaltwelle 22 wieder im zweiten Bewegungsmodus bewegt, also linear verschoben, und nachfolgend wieder im ersten Bewegungsmodus bewegt, also gedreht, so dass der Verzahnungsvorsprung 36 nunmehr wieder in seiner Wahlrichtung in die Verzahnungsaussparungen 38 der nunmehr wieder in ihrer Gesamtheit korrekt positionierten Schaltstangen S₁ - S₄ eintreten kann. Nachfolgend können dann wieder herkömmliche Schaltvorgänge mit Schaltstangenwahl im ersten Bewegungsmodus und Schaltstangenbetätigung im zweiten Bewegungsmodus durchgeführt werden.

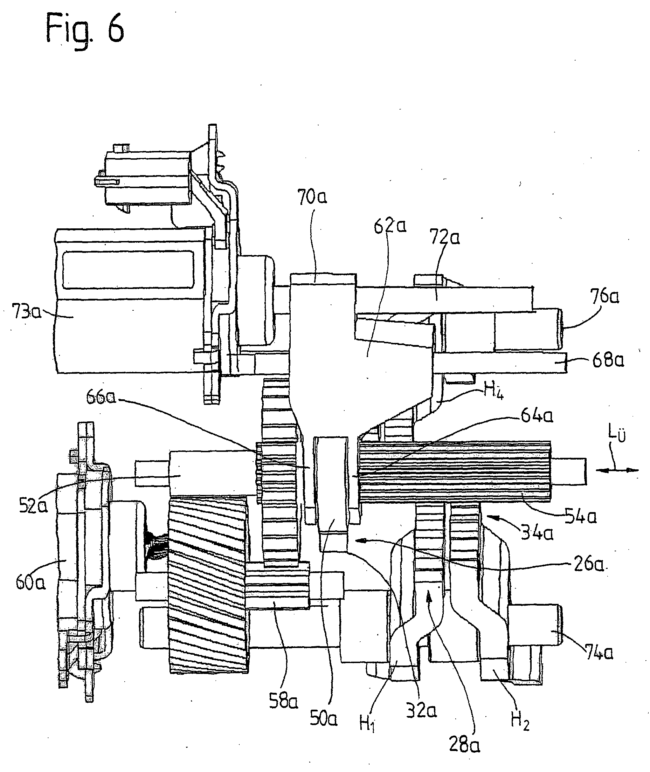

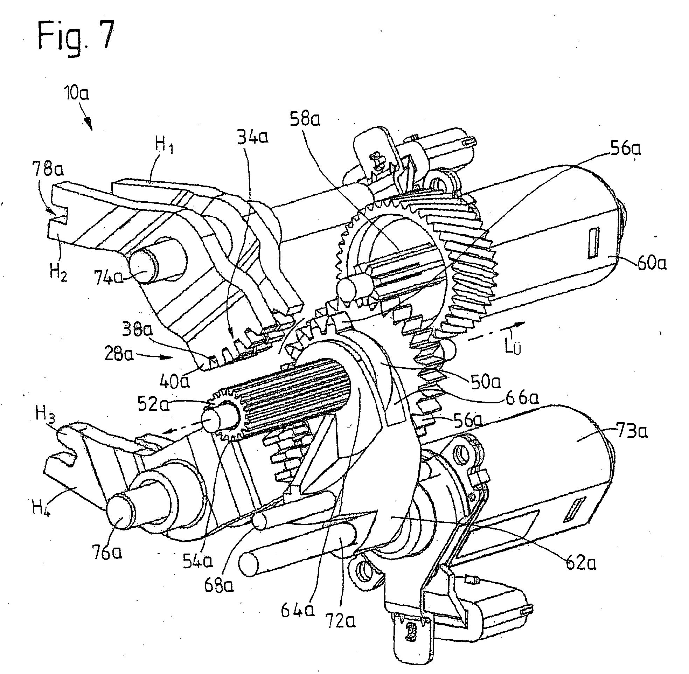

Vorangehend ist ein Getriebebetätigungsmechanismus beschrieben worden, bei welchem als erstes Schaltorgan eine Schaltwelle 22 wirksam ist, die mit ihrem daran vorgesehenen ersten Wechselwirkungsbereich 26 im ersten Bewegungsmodus, d.h. zur Auswahl von einem der zweiten Schaltorgane S₁ - S₄ in Rotation zu bewegen ist und die in ihrem zweiten Bewegungsmodus, also zum Betätigen von einem der zweiten Schaltorgane, um einen Gang einzulegen oder auszulegen, in Linearverschiebung zu bewegen ist. Nachfolgend wird mit Bezug auf die Fig. 6 - 9 eine alternative Ausgestaltung eines erfindungsgemäßen Getriebebetätigungsmechanismus beschrieben, bei dem der erste Bewegungsmodus, also derjenige Bewegungsmodus, in dem ein erstes Schaltorgan zur Auswahl von einem der zweiten Schaltorgane bewegt wird, eine Linearverschiebung ist, während der zweite Bewegungsmodus, also die dann tatsächlich zur Betätigung von einem der zweiten Schaltorgane führende Bewegung, eine Rotationsbewegung ist. Bei dieser nun beschriebenen Ausgestaltungsform sind Bauteile, die hinsichtlich Aufbau bzw. Funktion vorangehend bereits beschriebenen Bauteilen entsprechen, mit dem gleichen Bezugszeichen unter Hinzufügung eines Anhangs "a" bezeichnet.

Bei dieser alternativen Ausgestaltungsform eines Getriebebetätigungsmechanismus 40a ist als erstes Schaltorgan ein Schaltrad 50a vorgesehen. Dieses Schaltrad 50a ist auf einer Übertragungswelle 52a getragen. Diese Übertragungswelle 52a ist mit einer Außenverzahnung 54a versehen, die in der Längsrichtung L_{Ü} dieser Übertragungswelle 52a sich erstreckt. Das Schaltrad 50a weist eine komplementäre Innenverzahnung auf, so dass es mit der Außenverzahnung 54a in Kämmeingriff steht und somit zwar grundsätzlich bezüglich der Übertragungswelle 52a in Richtung von deren Längsachse L_{Ü} bewegbar ist, jedoch auf der Übertragungswelle 52a nicht frei drehbar ist. Die Übertragungswelle 52a wiederum ist auf einem nicht dargestellten Träger drehbar getragen und weist an einem ihrer Endbereiche ein Antriebsritzel 56a auf, das mit einem weiteren Antriebsritzel 58a in Kämmeingriff steht. Dieses weitere Antriebsritzel 58a wiederum ist auf einer Antriebswelle eines Antriebsmotors 60a getragen, so dass durch Erregung dieses Antriebsmotors 60a, z.B. Elektromotor, über die beiden Antriebsritzel 58a, 56a die Übertragungswelle 52a um ihre Längsachse L_{Ü} drehbar ist und bei dieser Drehung auch das Schaltrad 50a dreht.

Dem Schaltrad 50a ist ferner ein gabelartiger Mitnehmer 62a zugeordnet. Dieser greift mit jeweiligen Mitnahmetaschen 64a, 66a an den beiden Axialseiten - bezogen auf die Längsachse L_{Ü} - am Schaltrad 50a an, so dass das Schaltrad 50a im Wesentlichen spielfrei zwischen diesen beiden Laschen 64a, 66a gehalten ist. Der Mitnehmer 62a ist auf einer in Richtung der Längsachse L_{Ü} sich erstreckenden Stange 68a verschiebbar geführt und steht mit einem Gewinde- oder Schneckenabschnitt 70a in Kämmeingriff mit einer Antriebsgewindestange oder Antriebsschnecke 72a. Diese Antriebsschnecke oder Antriebsgewindestange 72a wird von einem weiteren Antriebsmotor 73a zur Drehung angetrieben. Eine Drehung derselben hat eine Verschiebung des Mitnehmers 62a und somit auch eine Verschiebung des Schaltrads 50a in Richtung der Längsachse L_{Ü} zur Folge.

Das hier als erstes Schaltorgan wirksame Schaltrad 50a weist als ersten Wechselwirkungsbereich 26a wieder eine Verzahnungsformation 32a mit einer Mehrzahl von in der Umfangsrichtung um die Längsachse L_{Ü} aufeinander folgenden Verzahnungsvorsprüngen 36a auf. Diese Verzahnungsvorsprünge 36a bzw. die Verzahnungsformation 32a bilden eine Segmentverzahnung am Außenumfang des Schaltrads 50a, so dass dieses nicht in seinem gesamten Umfangsbereich mit Verzahnungsvorsprüngen versehen ist.

Als zweite Schaltorgane sind bei dieser Ausgestaltungsform mehrere Schalthebel H₁, H₂, H₃ und H₄ vorgesehen. Diese Schalthebel H₁ - H₄ sind jeweils paarweise zusammengruppiert auf Kippachsen 74a bzw. 76a schwenkbar gelagert, und zwar schwenkbar um jeweilige Raumachsen, die zur Längsachse L_{Ü} der Übertragungswelle 52a im Wesentlichen parallel liegen. Jeder dieser Schalthebel H₁ - H₄ ist im Wesentlichen frei schwenkbar auf der ihm zugeordneten Kippachse 74a bzw. 76a getragen, ist jedoch in der Längsrichtung der jeweiligen Kippachse 74a, 76a nicht verschiebbar.

Jeder dieser als zweite Schaltorgane wirksamen Schalthebel H₁ - H₄ weist einen zweiten Wechselwirkungsbereich 28a in Form einer jeweiligen Verzahnungsformation 34a auf. Auch diese Verzahnungsformationen 34a weisen wiederum mehrere Verzahnungsvorsprünge 40a mit den dazwischen gebildeten Verzahnungsaussparungen 38a auf.

Weiterhin sind die verschiedenen Schalthebel H₁ - H₄ in Richtung der Längsachse L_{Ü} der Übertragungswelle 52a, also auch derjenigen Richtung, in welcher durch Erregung des Antriebsmotors 73a das Schaltrad 50a verschoben werden kann, so gestaffelt, dass in dieser axialen Richtung diese Schalthebel H₁ - H₄ keinen Überlapp haben. Somit kann durch Erregung des Antriebsmotors 73a das Schaltrad 50a so linear verschoben werden, dass es jeweils in dieser Linearverschieberichtung, also in Richtung der Längsachse L_{Ü} , dann mit einem der Schalthebel H₁ - H₄ ausgerichtet ist. Ist in dieser axialen Richtung eine Ausrichtung zwischen dem Schaltrad 50a und einem der Schalthebel H₁ - H₄ vorhanden, so ist aufgrund der Radialdimensionierung des Schaltrades 50a und der Längenbemessung der Schalthebel H₁ - H₄ gleichzeitig auch dafür gesorgt, dass die beiden Verzahnungsformationen 32a und 34a der beiden involvierten Bauteile in Kämmeingriff stehen. Das heißt, dass bei der Linearverschiebung des Schaltrades 50a zur Herstellung der Wechselwirkungsstellung mit einem der Schalthebel H₁ - H₄ die Verzahnungsvorsprünge 36a der Verzahnungsformation 32a seitlich in die Verzahnungsaussparungen 38a der involvierten Verzahnungsformation 34a von einem der Schalthebel H₁ - H₄ eintritt.

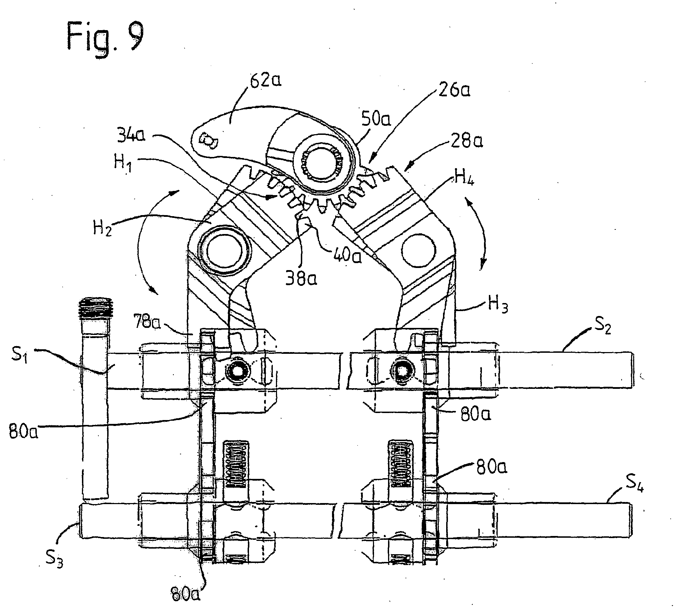

Weiterhin weist jeder der Schalthebel H₁ - H₄ an seinem der jeweiligen Verzahnungsformation 34a entgegengesetzt liegenden Endbereich einen gabelartigen Mitnahmeabschnitt 78a auf. Dieser Mitnahmeabschnitt 78a steht in Mitnahmeeingriff mit einem jeweiligen Gegen-Mitnahmeelement 80a, das wiederum an einer von vier Schaltstangen S₁ - S₄ vorgesehen ist. Das heißt, dass, wie dies in Fig. 9 angedeutet ist, durch das Verschwenken der Schalthebel H₁ - H₄ durch Zusammenwirken der jeweiligen Mitnahmeabschnitte 78a mit den Gegen-Mitnahmeelementen 80a dann jeweils eine der mit einem dieser Schalthebel zusammenwirkenden Schaltstangen S₁ - S₄ verschoben werden kann. Diese Schaltstangen S₁ - S₄ stehen wiederum in Wirkeingriff mit den vorangehend beschriebenen Synchronisiervorrichtungen, so dass ihr Verschieben das Einlegen oder Auslegen eines jeweils zugeordneten Gangs zur Folge hat.

Da hier ebenfalls wieder vorgesehen sein kann, dass jede dieser Schaltstangen S₁ - S₄ zum Betätigen von zwei Synchronisiervorrichtungen, also zum Einlegen bzw. Auslegen von zwei Gängen verschoben werden kann, kann jede dieser Schaltstangen S₁ - S₄ grundsätzlich wieder drei Schaltstellungen einnehmen. In jeder dieser Schaltstellungen kann beispielsweise eine Verrastung vorgegeben sein. In Zuordnung zu jeder dieser durch Linearverschiebung der Schaltstangen S₁ - S₄ erlangbaren Schaltstellungen nimmt dann selbstverständlich auch jeder Schalthebel H₁ - H₄ eine entsprechende Schaltstellung ein. Dies wiederum bedeutet, dass die Verzahnungsformationen 34a an diesen Schalthebeln H₁ - H₄ bei korrekter Funktionalität eine von drei Raumlagen einnehmen kann, wobei diese drei Raumlagen jeweils um ein der Bewegung zwischen zwei Schaltstellungen entsprechendes Winkelinkrement zueinander verschoben sind. Auch hier ist wieder vorgesehen, dass die Periodizität der Verzahnungsformationen 34a dem Abstand zwischen diesen Raumlagen bzw. zwei Schaltstellungen entspricht. Bei einer aus Stabilitätsgründen bevorzugten Variante kann wieder vorgesehen sein, dass die Periode der Verzahnungsformationen 34a wieder genau diesem Übergang zwischen zwei Schaltstellungen entspricht. Dies hat zur Folge, dass die Verzahnungsformationen 34a unabhängig von der jeweils eingenommenen Schaltstellung relativ zueinander so positioniert sind, dass jeweils Verzahnungsaussparungen 38a zueinander in Richtung der Längsachse L_{Ü} fluchten, so dass bei in entsprechender Vorgabe positioniertem Schaltrad 50a dieses in dieser Achsrichtung verschoben werden kann und mit seinen Verzahnungsvorsprüngen 34a durch die Verzahnungsaussparungen 38a der verschiedenen Schalthebel H₁ - H₄ hindurch bewegt werden kann bzw. in Eingriff und außer Eingriff mit diesen bewegt werden kann. Hierzu ist es selbstverständlich auch erforderlich, dass die an den verschiedenen Kippachsen 74a und 76a vorgesehenen Schalthebel H₁ , H₂ und H₃ ,H₄ paarweise so zueinander positioniert sind, dass dieser axiale Durchgang bzw. das axiale Ineingrifftreten der Verzahnungsformation 32a am Schaltrad 50a sowohl mit den Verzahnungsformationen 34a der Schalthebel H₁, H₂, als auch den Verzahnungsformationen 34a der Schalthebel H₃ , H₄ möglich ist.

Um bei einem derartigen Getriebebetätigungsmechanismus nunmehr eine Auswahl von einem der zweiten Schaltorgane, also von einem der Schalthebel H₁ - H₄ zu treffen und somit beispielsweise ein Paar von Gängen auszuwählen, wird also durch Erregung des Antriebsmotors 73a das als erstes Schaltorgan wirksame Schaltrad 50a zunächst in einem ersten Bewegungsmodus linear verschoben und somit axial in Eingriff mit dem ausgewählten oder auszuwählenden Schalthebel gebracht. Ist diese Auswahl erfolgt, kann dann durch Erregen des Antriebsmotors 60a das Schaltrad 50a gedreht werden, was eine Verschwenkung des zu diesem in Wechselwirkungsstellung sich befindenden und als zweites Schaltorgan wirksamen Schalthebels führt. Diese Verschwenkung wiederum führt zu einer Linearverschiebung der mit diesem Schalthebel zusammenwirkenden Schaltstange und somit beispielsweise zum Einlegen eines Gangs. Soll dann ein anderer Gang in Zusammenwirkung mit einer anderen Schaltstange eingelegt oder ausgelegt werden, wird erneut das Schaltrad 50a durch Erregen des Antriebsmotors 73a im ersten Bewegungsmodus linear verschoben, wobei es aus dem Eingriff mit dem zuvor verschwenkten Schalthebel tritt, und aufgrund der Tatsache, dass auch nach der zuvor im zweiten Bewegungsmodus erfolgten Drehung die Verzahnungsvorsprünge 36a in Flucht sind mit den Verzahnungsaussparungen 38a der Schalthebel H₁ - H₄ , kann nunmehr das Schaltrad 50a in Eingriff mit einem anderen der Schalthebel gebracht werden, um dann durch erneutes Drehen des Schaltrads 50a diesen Schalthebel zu schwenken und somit einen zugeordneten Gang einzulegen oder auszulegen.

Man erkennt aus der vorangehenden Beschreibung, dass hier grundsätzlich die gleiche Funktionalität vorliegt, wie bei der ersten beschriebenen Ausgestaltungsform. Es kann also unabhängig davon, in welcher Schaltstellung eines der zweiten Schaltorgane ist, das erste Schaltorgan immer in Eingriff und außer Eingriff mit diesem bzw. mit allen zweiten Schaltorganen gebracht werden. Es ist lediglich eine Vertauschung der jeweiligen Bewegungsarten in den verschiedenen Bewegungsmodi vorhanden. Da bei dieser Ausgestaltungsvariante die Zusammenwirkung des ersten Schaltorgans mit den zweiten Schaltorganen in Rotation erfolgt, ist es vorteilhaft, sowohl beim ersten Wechselwirkungsbereich 26a, als auch beim zweiten Wechselwirkungsbereich 28a bzw. bei allen zweiten Wechselwirkungsbereichen 28a mehrere Verzahnungsvorsprünge bzw. Verzahnungssegmente nach Art von Stirnverzahnungen bereitzuhalten, um unabhängig von der Schwenk- bzw. Drehlage einen stabilen und gleichmäßig wirksamen Eingriff beibehalten zu können.

Auch bei dieser Ausgestaltungsvariante des Getriebebetätigungsmechanismus 40a können und müssen ggf. Maßnahmen ergriffen werden, um bei einem so genannten Gangspringer dafür zu sorgen, dass der involvierte Schalthebel bzw. die involvierte Schaltstange wieder in eine Positionierung gelangt, in welcher das Schaltrad korrekt in Eingriff mit diesem Schalthebel gebracht werden kann. Auch hier kann dann derart vorgegangen werden, dass bei aufgrund des Herausspringens eines Gangs fehlpositioniertem Schalthebel das Schaltrad 50a zunächst im ersten Bewegungsmodus, also in dem Linearverschiebebewegungsmodus, axial aus demjenigen Bereich heraus bewegt wird, in welchem es in einer Wechselwirkungsstellung mit irgendeinem der Schalthebel H₁ - H₄ ist. Auch hier wird im Allgemeinen diese Linearverschiebung in Richtung von demjenigen Schalthebel, der fehlpositioniert ist, weg erfolgen. Ist keine Wechselwirkungsstellung zu irgendeinem der Schalthebel H₁ - H₄ vorhanden, kann dann im zweiten Bewegungsmodus das Schaltrad 50a gedreht werden, und zwar so weit, bis sein erster Wechselwirkungsbereich 26a, also die Verzahnungsformation 32a, vollständig aus demjenigen Bereich heraus bewegt ist, in dem die zweiten Wechselwirkungsbereiche 34a der Schalthebel H₁ - H₄ liegen. Dies ist insbesondere daher möglich, da die Verzahnungsformation 32a am Schaltrad 50a nur segmentartig ausgebildet ist und in entsprechender Weise auch die Verzahnungsformationen 34a an den Schalthebeln H₁ - H₄ segmentartig ausgestaltet sind. Nachfolgend wird dann das Schaltrad 50a wieder im ersten Bewegungsmodus zurück bewegt, und zwar so, dass es nunmehr in demjenigen axialen Bereich positioniert ist, in dem auch der fehlpositionierte Schalthebel liegt. Durch Zurückbewegen des Schaltrades 50a im zweiten Bewegungsmodus kommt dann dessen Wechselwirkungsbereich 26a in Umfangsrichtung in Anlage am Wechselwirkungsbereich 28a des fehlpositionierten Schalthebels und beaufschlagt diesen, so dass er nunmehr verschwenkt, und zwar entweder in derjenigen Richtung zurück, in der er eigentlich positioniert sein sollte, also in Richtung Gang einlegen, oder in derjenigen Richtung, in welcher die Neutralstellung erlangt wird. Dies wird wiederum davon abhängen, an welcher Umfangsseite das Schaltrad 50a den betroffenen Schalthebel beaufschlagen wird. Nach wieder erlangter korrekter Positionierung des Schalthebels in einer der für diesen an sich vorgesehenen korrekten Schaltstellungen kann das Schaltrad 50a zunächst durch Bewegen im ersten Bewegungsmodus, also linear Verschieben, dann durch Bewegen im zweiten Bewegungsmodus, also Verschwenken, und dann Zurückbewegen im ersten Bewegungsmodus wieder in den Eingriff mit einem der Schalthebel bewegt werden.

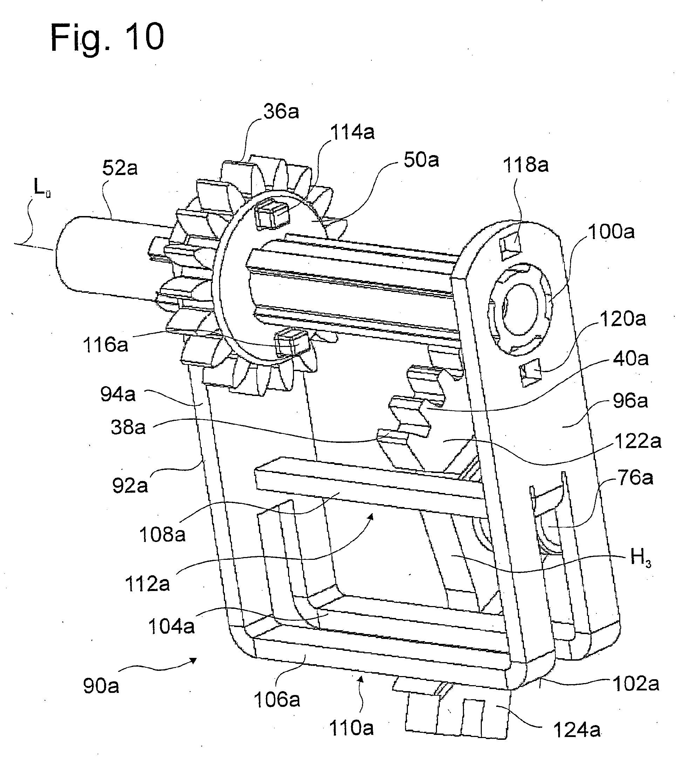

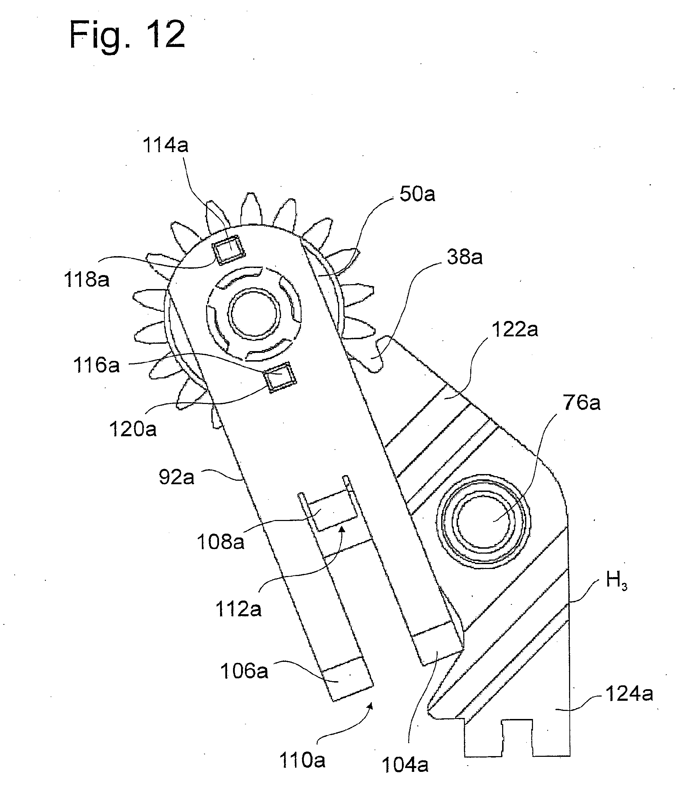

Die Fig. 10 - 12 zeigen eine Weiterbildung des vorangehend mit Bezug auf die Fig. 6 - 9 detailliert beschriebenen Getriebebetätigungsmechanismus. Insbesondere ist in diesen Fig. 10 - 12 eine Rückstellanordnung 90a gezeigt, durch welche auf die verschiedenen Schalthebel H₁ - H₄ eingewirkt werden kann, um diese dann, wenn sie, wie vorangehend auch bereits dargestellt, in eine undefinierte Positionierung gelangen, in eine jeweils vorbestimmte Schaltstellung, beispielsweise die einer Neutralstellung einer jeweils betätigten Synchronisiervorrichtung zugeordnete Stellung, zu bewegen. Aus Gründen der einfacheren Darstellung ist in den Fig. 10 - 12 diese Rückstellanordnung 90a nur in Verbindung mit einem der vorangehend beschriebenen Schalthebel, nämlich dem Schalthebel H₃, dargestellt. Es ist selbstverständlich, dass diese Rückstellanordnung 90a, wie nachfolgend auch noch detailliert beschrieben, in gleicher Art und Weise mit den anderen Schalthebeln H₁, H₂ und H₄ zusammenwirken kann.

Die Rückstellanordnung 90a umfasst ein im Wesentlichen U-förmig ausgestaltetes Rückstellelement 92a. Im Bereich seiner beiden U-Schenkel 94a, 96a ist das Rückstellelement 90a beispielsweise an der Übertragungswelle 52a so getragen, dass es um die Längsachse L_{Ü} derselben schwenkbar ist. Hierzu können in den Endbereichen der beiden U-Schenkel 94a, 96a jeweils die Übertragungswelle 52a aufnehmende Schwenköffnungen 98a, 100a ausgebildet sein. Das Rückstellelement 92a ist so positioniert, dass das Schaltrad 50a zwischen den beiden U-Schenkeln 94a, 96a liegt und, ohne in Konflikt mit dem Rückstellelement 92a zu treten, in Richtung der Längsachse L_{Ü} bewegt werden kann, um in die Wechselwirkungsstellung mit allen der Schalthebel H₁ - H₄ gebracht werden zu können. Das heißt, auch die auf den beiden Kippachsen 74a und 76a positionierten Schalthebel H ₁ - H₄ liegen im Erstreckungsbereich des Rückstellelements 92a. Wie bereits angesprochen, ist von diesen Schalthebeln nur der auf der Kippachse 76a schwenkbar getragene Schalthebel H₃ gezeigt.

Ein die beiden U-Schenkel 94a, 96a verbindender Stegbereich 102a bildet mit seinen beiden nebeneinander liegenden Stegabschnitten 104a, 106a einen ersten Rückstellbereich 110a. Ein durch Ausstanzen und Umformen gebildeter weiterer Stegabschnitt 108a, der zu den beiden Stegabschnitten 104a, 106a zentrisch positioniert ist und nur mit dem U-Schenkel 96a fest verbunden ist, bildet einen zweiten Rückstellbereich 112a. Man erkennt, dass diese beiden Rückstellbereiche 110a, 112a bezüglich der Übertragungswelle 52a bzw. deren Längsachse L_{Ü} einen unterschiedlichen Radialabstand aufweisen, so dass der erste Rückstellbereich 100a weiter entfernt von dieser Achse L_{Ü} liegt, als der zweite Rückstellbereich 112a.

Zum Aufbau des Rückstellelements 92a sei ausgeführt, dass dieses in einfacher Art und Weise durch Ausstanzen und Umformen eines Blechrohlings erhalten werden kann.

Das grundsätzlich auf der Übertragungswelle 52a frei schwenkbare Rückstellelement 92a kann mit dem Schaltrad 50a gekoppelt werden, um bei Drehung der Übertragungswelle 52a und somit auch Drehung des Schaltrads 50a eine Verschwenkung des Rückstellelements 92a erlangen zu können. Zu diesem Zwecke weist das Schaltrad 50a an seinen beiden Seiten jeweils zwei Kopplungsvorsprünge 114a, 116a auf, während das Rückstellelement 92a im Bereich der freien Enden seiner U-Schenkel 94a, 96a jeweils ein Paar von Kopplungsaussparungen 118a, 120a aufweist. Sowohl die paarweise vorgesehenen Kopplungsvorsprünge 114a, 116a, als auch die paarweise vorgesehenen Kopplungsaussparungen 118a, 120a sind bezüglich der Längsachse L_{Ü} jeweils an entgegengesetzten Positionierungen, also mit einem Winkelabstand von 180°, vorgesehen.

Um einen gegenseitigen Konflikt zwischen den am Schaltrad 50a vorgesehenen Kopplungsvorsprüngen 114a, 116a und den Mitnahmelaschen 64a, 66a des gabelartigen Mitnehmers 62a zu vermeiden, kann dieser gabelartige Mitnehmer 62a so ausgebildet sein, dass er nicht, wie beispielsweise in Fig. 6 erkennbar, das Schaltrad 50a an seinen beiden Seiten im Wesentlichen voll überdeckt, sondern an diesem nur im radial äußersten Randbereich angreift, so dass auch bei Drehung des Schaltrades 50a die Kopplungsvorsprünge 114a, 116a nicht an den Mitnahmelaschen 64a, 66a anstoßen können.

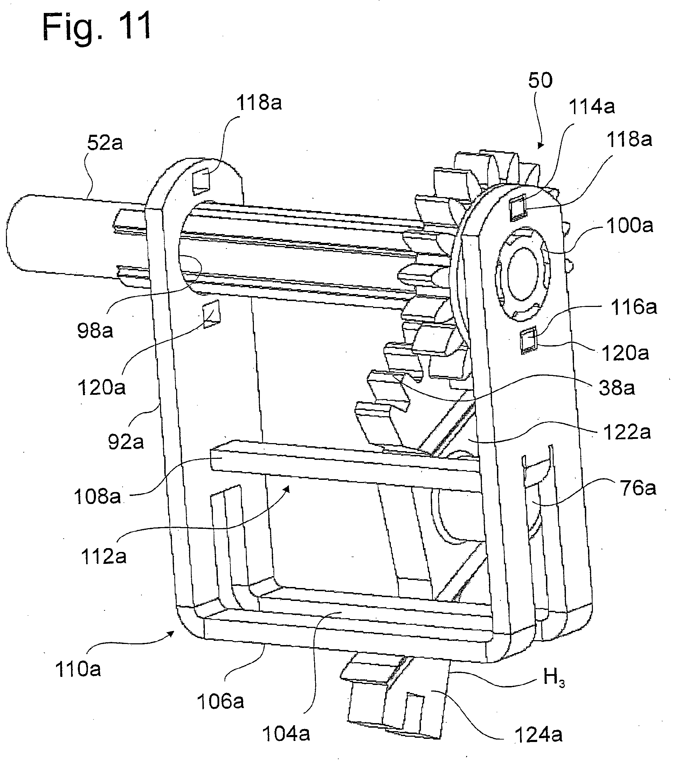

Durch Verschiebung des Schaltrads 50a vermittels des gabelartigen Mitnehmers 62a in Richtung der Längsachse L_{Ü}, also Bewegen des Schaltrads 50a im ersten Bewegungsmodus, können die jeweils an einer Seite des Schaltrads 50a vorgesehenen Kopplungsvorsprünge 114a, 116a in Kopplungseingriff mit einem Paar der Kopplungsaussparungen 118a, 120a gebracht werden. Bei der in Fig. 10 gezeigten Positionierung des Schaltrads 50a sind die nicht erkennbaren Kopplungsvorsprünge 114a, 116a in Eingriff mit den Kopplungsaussparungen 118a, 120a des U-Schenkels 94a. Bei der in Fig. 11 gezeigten Positionierung des Schaltrads 50a sind die erkennbaren Kopplungsvorsprünge 114a, 116a in Kopplungseingriff mit den am U-Schenkel 96a vorgesehenen Kopplungsaussparungen 118a, 120a. Jede der in den Fig. 10 und 11 gezeigten Positionierungen des Schaltrads 50a entspricht einer Kopplungsstellung, in welcher zwar eine Drehmitnahmekopplung zwischen dem Schaltrad 50a und dem Rückstellelement 92a bereitgestellt ist, das Schaltrad 50a jedoch zu keinem der Schalthebel H₁ - H₄ in einer Wechselwirkungsstellung positioniert ist und somit eine Verdrehung der Übertragungswelle 52a und des Schaltrads 50a nicht über das Schaltrad 50a zu einer Verschwenkbewegung von einem der Schalthebel H₁ - H₄ umgesetzt wird.

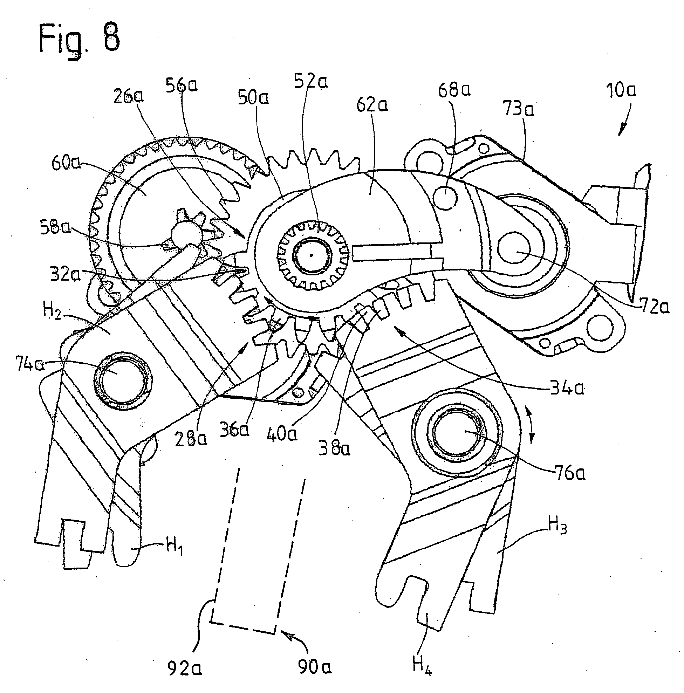

Der Aufbau der Rückstellanordnung 90a kann ferner so sein, dass, wie in Fig. 8 anhand des in Strichlinien eingezeichneten Schaltelements 92a veranschaulicht, dieses Rückstellelement 92a grundsätzlich in einer Ausgangsstellung positioniert ist, die bezüglich der beiden Kippachsen 74a, 76a und somit auch bezüglich der darauf getragenen Gruppen von Schalthebeln H₁, H₂ bzw. H₃, H₄ zentriert ist. Es kann beispielsweise eine Rastanordnung vorgesehen sein, durch welche das Rückstellelement 92a mit einem vergleichsweise geringen Rastelement in dieser Ausgangsstellung gehalten wird. Da diese Ausgangsstellung grundsätzlich bekannt ist, kann zum Herstellen des Kopplungseingriffs das zunächst beliebig verdrehte Schaltrad 50a ebenfalls so gedreht werden, dass die daran vorgesehenen Kopplungsvorsprünge 114a, 116a in Umfangsrichtung mit den Kopplungsaussparungen 118a, 120a ausgerichtet sind und somit dann durch axiale Verschiebung des Schaltrads 50a eine der Kopplungsstellungen zwischen dem Schaltrad 50a und dem Rückstellelement 92a hergestellt werden kann.

Die Funktionsweise der vorangehend hinsichtlich ihres konstruktiven Aufbaus beschriebenen Rückstellanordnung 90a wird nachfolgend beschrieben.

Es sei zunächst angenommen, dass einer der Schalthebel H₁ - H₄, also beispielsweise der in den Fig. 10 - 12 gezeigte Schalthebel H₃, in ungewünschter Art und Weise in eine undefinierte Positionierung gelangt ist und somit auch die mit diesem zusammenwirkende Synchronisiervorrichtung in undefinierter Positionierung ist. Da im Allgemeinen jedoch nicht jedem der Schalthebel H₁ - H₄ eine Sensorik zugeordnet ist, um dessen Positionierung zu erfassen, wird es grundsätzlich nicht bekannt sein, welcher bzw. welche der Schalthebel H₁ - H₄ in undefinierter Positionierung sind. Dass eine undefinierte Positionierung vorliegt, kann beispielsweise dadurch erfasst werden, dass eine nicht normale Drehzahlentwicklung vorliegt.

Ist also festgestellt worden, dass bei zumindest einem der Schalthebel H₁ - H₄ eine derartige undefinierte Positionierung vorliegt, wird zunächst das Schaltrad 50a, sofern nicht bereits erfolgt, in eine Drehstellung gebracht, in welcher der Kopplungseingriff der Kopplungsvorsprünge 114a, 116a mit einem Paar der Kopplungsaussparungen 118a, 120a herstellbar ist. Darauf folgend wird das Schaltrad 50a axial verschoben, also im ersten Bewegungsmodus bewegt, und zwar solange, bis es in einer seiner Kopplungsstellungen ist. Ist dies erfolgt, so wird beispielsweise ausgehend von der in Fig. 8 erkennbaren Stellung das Schaltrad 50a zur Drehung im Gegenuhrzeigersinn angetrieben, also im zweiten Bewegungsmodus bewegt, was zu einer entsprechenden Verschwenkbewegung des Rückstellelements 92a führt.

Es sei in diesem Zustand weiter angenommen, dass der Schalthebel H₃ ausgehend von seiner einer Neutralstellung der zugeordneten Synchronisiervorrichtung entsprechenden neutralen Schwenklage im Gegenuhrzeigersinn verschwenkt ist.

Im Verlaufe der Rückstellbewegung, also Schwenkbewegung, des Rückstellelements 92a wird bei dieser Schwenklage des Schalthebels H₃ der Stegabschnitt 108a, also der zweite Rückstellbereich 112a, zunächst mit einem Hebelabschnitt 122a des Schalthebels H₃ in Kontakt treten. Dieser Hebelabschnitt 122a liegt zwischen der die Schwenkachse definierenden Kippachse 76a und dem Bereich der Wechselwirkung mit dem Schaltrad 50a. Eine andauernde Schwenkbewegung bzw. Rückstellbewegung des Rückstellelements 92a führt dazu, dass der Schalthebel H₃ bei Betrachtung in Fig. 8 im Uhrzeigersinn verschwenkt wird und somit in Richtung zu seiner der neutralen Schaltstellung entsprechenden Schwenklage bewegt wird.

Erreicht der Schalthebel H₃ diese Schwenklage bzw. für ihn vorbestimmte Schaltstellung, kann vorgesehen sein, dass dann auch der zweite Hebelabschnitt 124a desselben in Kontakt mit dem Rückstellelement 92a tritt, und zwar mit dem zweiten Rückstellbereich 110a, nämlich dem Stegabschnitt 104a desselben. Dieser zweite Hebelabschnitt 124a liegt bezüglich der Kippachse 76a an der anderen Seite des Hebelabschnitts 122a.

Ist diese Positionierung erreicht, so tritt eine Bewegungsblockierung des Rückstellelements 92a auf, was durch einen Anstieg des dem entsprechenden Motor 60a zugeführten Stroms erfasst werden kann. In dieser Situation ist dann erkennbar, dass beispielsweise der Schalthebel H₃ grundsätzlich aber alle auf der Kippachse 76a positionierten Schalthebel H₃ und H₄ die gleiche Schwenklage einnehmen, also beispielsweise jeweils in einer der Neutralstellung einer zugeordneten Synchronisiervorrichtung entsprechenden Schwenklage bzw. Schaltstellung sind. War z.B. der Schalthebel H₃ ausgehend von seiner vorbestimmten Schaltstellung, also beispielsweise der einer Neutralstellung entsprechenden Schwenkstellung desselben, in der anderen Richtung heraus bewegt, also verschwenkt, so tritt bei Durchführung der Rückstellbewegung das Rückstellelement 92a zunächst mit seinem ersten Rückstellbereich 110a in Kontakt mit dem Schalthebel H₃, nämlich im Bereich des Hebelabschnitts 124a. Daraufhin wird der Schalthebel H₃ im Gegenuhrzeigersinn in Richtung zu seiner vorbestimmten Schaltstellung zurück verschwenkt, und zwar solange, bis der Hebelabschnitt 122a in Kontakt mit dem zweiten Rückstellbereich 112a des Rückstellelements 92a tritt.

In Zuordnung zu der Kippachse 76a bzw. der daran schwenkbar getragenen Gruppe von Schalthebeln H₃, H₄ kann dann davon ausgegangen werden, dass kein Schalthebel mehr in einer undefinierten Positionierung ist und dass alle Schalthebel bzw. die zugeordneten Synchronisiervorrichtungen in einer vorbestimmten Schaltstellung, also beispielsweise der Neutralstellung, sind.

Daraufhin wird das Schaltrad 50a zur Drehung in der entgegengesetzten Richtung, also im Uhrzeigersinn, angetrieben. Damit verschwenkt auch das Rückstellelement 92a in Fig. 8 im Uhrzeigersinn und kann nunmehr mit seinem ersten Rückstellbereich 110a, nämlich dem Stegabschnitt 106a desselben, und seinem zweiten Rückstellbereich 108a auf die andere Gruppe von Schalthebeln, nämlich die auf der Kippachse 74a schwenkbaren Schalthebel H₁, H₂ einwirken. Sollte auch hier einer der Schalthebel H₁ und H₂ undefiniert bzw. nicht in seiner vorbestimmten Schaltstellung, also beispielsweise wiederum der der Neutralstellung entsprechenden Stellung, positioniert gewesen sein, wird auch hier durch das Rückstellelement 92a eine entsprechende Rückstellung erlangt. Daraufhin kann dann durch Zurückdrehen des Schaltrads 50a wieder im Gegenuhrzeigersinn das Rückstellelement 92a wieder in die in Fig. 8 eingezeichnete Ausgangsstellung gebracht werden. Ist dies erfolgt, kann durch axiales Verschieben des Schaltrads 50a, also erneutes Bewegen desselben im ersten Bewegungsmodus, die Kopplung zwischen diesem und dem Rückstellelement 92a aufgehoben werden, und das Schaltrad 50a kann wieder in eine Wechselwirkungsstellung mit einem der Schalthebel H₁ - H₄ gebracht werden, um nunmehr in dem Getriebe, in dem alle Synchronisiervorrichtungen momentan in einer Neutralstellung positioniert sind, einen Gang einzulegen.

Man erkennt aus der vorangehenden Beschreibung, dass durch Bereitstellen der Rückstellanordnung 90a eine Prozedur durchgeführt werden kann, mit welcher alle zweiten Schaltorgane, nämlich hier die Schalthebel H₁ - H₄, in einer definierten Positionierung angeordnet werden können. Im Verlaufe dieses Rückstellvorgangs wird selbstverständlich nur auf diejenigen der zweiten Schaltorgane, also der Rückstellhebel, eingewirkt werden, die nicht bereits in ihrer vorbestimmten Schwenk- bzw. Schaltstellung, also beispielsweise der neutralen Stellung, waren. Am Ende dieser Prozedur liegt dann ein absolut definierter Zustand der zweiten Schaltorgane und somit auch der damit zusammenwirkenden Synchronisiervorrichtung bzw. des Getriebes vor, und ausgehend von diesem definierten Zustand können dann wieder gewünschte Schaltvorgänge realisiert werden.

Es sei darauf hingewiesen, dass selbstverständlich bei der vorangehend detailliert beschriebenen Rückstellanordnung 90a verschiedene Variationen vorgesehen werden können. So kann beispielsweise das Rückstellelement 92a so ausgebildet sein, dass es mit den verschiedenen zweiten Schaltorganen, also im dargestellten Beispiel den Schalthebeln, in verschiedener Art und Weise zusammenwirkt bzw. diese so verstellt, dass diese in unterschiedliche vorbestimmte Schaltstellungen bzw. Schwenkstellungen gelangen. So kann beispielsweise vorgesehen sein, dass bei einem der Schalthebel die vorbestimmte Schaltstellung bzw. Schwenkstellung nicht der Neutralstellung, sondern einer Stellung mit eingelegtem Gang entspricht, während bei allen anderen Schalthebeln die vorbestimmte Schaltstellung der Neutralstellung entspricht. Dies führt dazu, dass am Ende einer Rückstellprozedur ein Gang eingelegt ist. Um dies erlangen zu können, ist es beispielsweise möglich, das Rückstellelement 90a bzw. die verschiedenen Rückstellbereiche 110a, 112a an die jeweils zu betätigenden bzw. zurückzustellenden Schalthebel angepasst zu gestalten, beispielsweise mit Vorsprüngen bzw. Aussparungen in den verschiedenen Rückstellbereichen 110a, 112a.

Es sei abschließend darauf hingewiesen, dass der erfindungsgemäße Getriebebetätigungsmechanismus selbstverständlich in einer Vielzahl verschiedenartiger Getriebe zum Einsatz gelangen kann. So können, wie vorangehend dargestellt, verschiedenste Arten von ersten und zweiten Schaltorganen zum Einsatz kommen. Neben den dargestellten Schaltstangen und Schalthebeln können auch noch direkt Schaltgabeln als zweite Schaltorgane wirken, also diejenigen gabelartigen Elemente, die unmittelbar mit den Synchronisiervorrichtungen zusammenwirken und die auf feststehenden Wellen zur Durchführung von Schaltvorgängen verschiebbar sind. In diesem Falle wären die zweiten Wechselwirkungsbereiche der in Fig. 2 gezeigten Ausgestaltungsform dann an den Schaltgabeln selbst vorzusehen, um diese zur Durchführung von Schaltvorgängen verschieben zu können. Auch ist es selbstverständlich, dass der erfindungsgemäße Getriebebetätigungsmechanismus sowohl bei Getrieben mit einer Getriebeeingangswelle, als auch bei Getrieben mit zwei oder mehreren Getriebeeingangswellen Anwendung finden kann. Auch bei so genannten Gruppengetrieben ist der Mechanismus einsetzbar.

## Patentansprüche

1. Getriebebetätigungsmechanismus, umfassend:
- ein zur Durchführung von Schaltvorgängen in einem Rotationsbewegungsmodus und einem Linearverschiebebewegungsmodus bewegbares erstes Schaltorgan (22; 50a),
- eine Mehrzahl von zum Einlegen/Auslegen von Gängen bewegbaren zweiten Schaltorganen (S₁, - S₄; H₁ - H₄),
- an dem ersten Schaltorgan (22; 50a) einen ersten Wechselwirkungsbereich (26; 26a),
- an jedem zweiten Schaltorgan (S₁ - S₄ ; H₁ - H₄) einen zweiten Wechselwirkungsbereich (28; 28a), wobei durch Bewegen des ersten Schaltorgans (22; 50a) in einem ersten Bewegungsmodus von Rotationsbewegungsmodus und Linearverschiebebewegungsmodus der erste Wechselwirkungsbereich (26; 26a) des ersten Schaltorgans (22; 50a) in eine zur Mitnahmewechselwirkung bereite Wechselwirkungsstellung mit einem der zweiten Wechselwirkungsbereiche (28; 28a) der zweiten Schaltorgane (S₁ - S₄ ; H₁ - H₄) bringbar ist und wobei bei Bewegung des ersten Schaltorgans (22; 50a) in einem zweiten Bewegungsmodus von Rotationsbewegungsmodus und Linearverschiebebewegungsmodus bei hergestellter Wechselwirkungsstellung der erste Wechselwirkungsbereich (26; 26a) des ersten Schaltorgans (22; 50a) den mit diesem in der Wechselwirkungsstellung sich befindenden zweiten Wechselwirkungsbereich (28; 28a) eines zweiten Schaltorgans (S₁ - S₄ ; H₁ - H₄) beaufschlagt, um dieses zweite Schaltorgan (S₁ - S₄ ; H₁ - H₄) zum Einlegen/Auslegen eines Ganges zu bewegen, wobei nach erfolgter Bewegung des ersten Schaltorgans (22; 50a) im zweiten Bewegungsmodus und dabei hervorgerufener Bewegung eines zweiten Schaltorgans (S₁ - S₄ ; H₁ - H₄) das erste Schaltorgan (22; 50a) im Wesentlichen ohne vorherige Zurückbewegung im zweiten Bewegungsmodus im ersten Bewegungsmodus bewegbar ist, um den ersten Wechselwirkungsbereich (26; 26a) des ersten Schaltorgans (22; 50a) in eine Wechselwirkungsstellung mit dem zweiten Wechselwirkungsbereich (28; 28a) eines anderen zweiten Schaltorgans (S₁ - S₄ ; H₁ - H₄) zu bringen.

2. Getriebebetätigungsmechanismus nach Anspruch 1,
**dadurch gekennzeichnet, dass** der erste Wechselwirkungsbereich ( 26; 26a) eine erste Verzahnungsformation (32; 32a) aufweist, dass jeder zweite Wechselwirkungsbsereich (28; 28a) eine zweite Verzahnungsformation (34; 34a) aufweist, wobei durch Bewegen des ersten Schaltorgans (22; 50a) im ersten Bewegungsmodus die erste Verzahnungsformation (32; 32a) des ersten Wechselwirkungsbereichs (26; 26a) in Mitnahmeeingriff mit der zweiten Verzahnungsformation (34; 34a) von einem der zweiten Wechselwirkungsbereiche (28; 28a) bringbar ist.

3. Getriebebetätigungsmechanismus nach Anspruch 2,
**dadurch gekennzeichnet, dass** die erste Verzahnungsformation (32; 32a) wenigstens einen Verzahnungsvorsprung (36; 36a) oder/und wenigstens eine Verzahnungsaussparung aufweist.

4. Getriebebetätigungsmechanismus nach Anspruch 2 oder 3,
**dadurch gekennzeichnet, dass** die zweite Verzahnungsformation (34; 34a) wenigstens einen Verzahnungsvorsprung (40; 40a) oder/und wenigstens eine Verzahnungsaussparung (38; 38a) aufweist.

5. Getriebebetätigungsmechanismus nach einem der Ansprüche 1 bis 4,
**dadurch gekennzeichnet, dass** jedes der zweiten Schaltorgane (S₁ - S₄ ; H₁ - H₄) in eine Mehrzahl von Schaltstellungen, vorzugsweise drei Schaltstellungen, bringbar ist, wobei unabhängig davon, in welcher der Schaltstellungen die verschiedenen zweiten Schaltorgane (S₁ - S₄ ; H₁ - H₄) positioniert sind, das erste Schaltorgan (22; 50a) im ersten Bewegungsmodus bewegbar ist, um die Wechselwirkungsstellung des ersten Wechselwirkungsbereichs (26; 26a) mit einem der zweiten Wechselwirkungsbereiche (28; 28a) herzustellen.

6. Getriebebetätigungsmechanismus nach den Ansprüchen 3, 4 und 5,
**dadurch gekennzeichnet, dass** jeder zweite Wechselwirkungsbereich (28; 28a) eine Mehrzahl von in der Bewegungsrichtung der zweiten Schaltorgane (S₁ - S₄ ; H₁ - H₄) aufeinander folgenden Eingriffsaussparungen (38; 38a) aufweist, und dass unabhängig von den Schaltstellungen der zweiten Schaltorgane (S₁ - S₄ ; H₁ - H₄) die zweiten Wechselwirkungsbereiche (28; 28a) so bezüglich einander positioniert sind, dass bei Bewegung des ersten Schaltorgans (22; 50a) im ersten Bewegungsmodus der daran vorgesehene wenigstens eine Verzahnungsvorsprung (36; 36a) sich durch in seiner Bewegungsrichtung positionierte Verzahnungsaussparungen (38; 38a) der zweiten Wechselwirkungsbereiche (28; 28a) hindurch bewegen kann.

7. Getriebebetätigungsmechanismus nach einem der Ansprüche 1 bis 6,
**dadurch gekennzeichnet, dass** das erste Schaltorgan (22) eine im ersten Bewegungsmodus in Rotation zu bewegende und im zweiten Bewegungsmodus in Linearverschiebung zu bewegende Schaltwelle (22) umfasst.

8. Getriebebetätigungsmechanismus nach Anspruch 7,
**dadurch gekennzeichnet, dass** die zweiten Schaltorgane (S₁ - S₁ )jeweils eine in Linearverschiebung zu bewegende und dabei mit wenigstens einer Synchronisiervorrichtung zum Einlegen/Auslegen eines Gangs zusammenwirkende Schaltstange (S₁ - S₄ ) umfassen.

9. Getriebebetätigungsmechanismus nach einem der Ansprüche 1 bis 6,
**dadurch gekennzeichnet, dass** das erste Schaltorgan (50a) ein im ersten Bewegungsmodus in Linearverschiebung zu bewegendes und im zweiten Bewegungsmodus in Rotation zu bewegendes Schaltrad (50a) umfasst.

10. Getriebebetätigungsmechanismus nach Anspruch 9,
**dadurch gekennzeichnet, dass** die zweiten Schaltorgane (H₁ - H₄) jeweils ein in Rotation zu bewegendes und dabei mit wenigstens einer Synchronisiervorrichtung zum Einlegen/Auslegen eines Gangs zusammenwirkendes Schwenkelement (H₁ - H₄) umfassen.

11. Getriebebetätigungsmechanismus nach Anspruch 9 oder 10,
**dadurch gekennzeichnet, dass** das Schaltrad (50a) auf einer zur Drehung antreibbaren Übertragungswelle (52a) linear verschiebbar und mit dieser zur gemeinsamen Drehung gekoppelt angeordnet ist, wobei ein erster Antrieb (60a) zum Drehen der Übertragungswelle (52a) vorgesehen ist und ein zweiter Antrieb (73a) zum Verschieben des Schaltrads (50a) auf der Übertragungswelle (52a) vorgesehen ist.

12. Getriebebetätigungsmechanismus nach einem der Ansprüche 1 bis 11,
**gekennzeichnet durch** eine Rückstellanordnung (90a) zum Sicherstellen, dass wenigstens ein Teil der zweiten Schaltorgane (H₁ - H₄ ) in einer jeweiligen vorbestimmten Schaltstellung ist.

13. Getriebebetätigungsmechanismus nach Anspruch 12,
**dadurch gekennzeichnet, dass** die Rückstellanordnung (90a) ein zur Durchführung einer Rückstellbewegung bewegbares Rückstellelement (92a) umfasst, bei welcher Rückstellbewegung wenigstens ein Teil derjenigen zweiten Schaltorgane (H₁ - H₄) die nicht in der für diese jeweils vorbestimmten Schaltstellung sind, in die jeweils vorbestimmte Schaltstellung bewegt wird.

14. Getriebebetätigungsmechanismus nach Anspruch 13,
**dadurch gekennzeichnet, dass** das Rückstellelement (92a) zur Durchführung einer ersten Rückstellbewegung bewegbar ist, bei welcher von einer ersten Gruppe von zweiten Schaltorganen (H₁ - H₄) diejenigen, die nicht in der für diese jeweils vorbestimmten Schaltstellung sind, in die jeweils vorbestimmte Schaltstellung bewegt werden, und zur Durchführung einer zweiten Rückstellbewegung bewegbar ist, bei welcher von einer zweiten Gruppe von zweiten Schaltorganen (H₁ - H₄) diejenigen, die nicht in der für diese jeweils vorbestimmten Schaltstellung sind, in die jeweils vorbestimmte Schaltstellung bewegt werden.

15. Getriebebetätigungsmechanismus nach Anspruch 13 oder 14,
**dadurch gekennzeichnet, dass** das Rückstellelement einen ersten Rückstellbereich (110a) aufweist, welcher bei Durchführung einer Rückstellbewegung die in einer ersten Richtung aus ihrer jeweiligen vorbestimmten Schaltstellung heraus bewegten zweiten Schaltorgane (H₁ - H₄) in die jeweils vorbestimmte Schaltstellung zurück bewegt, und einen zweiten Rückstellbereich (112a) aufweist, welcher bei Durchführung derselben Rückstellbewegung die in einer zweiten Richtung aus ihrer jeweiligen vorbestimmten Schaltstellung heraus bewegten zweiten Schaltorgane (H₁ - H₄) in die jeweils vorbestimmte Schaltstellung zurück bewegt.

16. Getriebebetätigungsmechanismus nach einem der Ansprüche 13 bis 15,
**dadurch gekennzeichnet, dass** an dem ersten Schaltorgan (50a) wenigstens ein erster Kopplungsbereich (114a, 116a) vorgesehen ist, dass an dem Rückstellelement (92a) wenigstens ein zweiter Kopplungsbereich (118a, 120a) vorgesehen ist, dass das erste Schaltorgan (50a) in wenigstens einer Kopplungsstellung positionierbar ist, in welcher ein erster Kopplungsbereich (114a, 116a) in Kopplungseingriff mit einem zweiten Kopplungsbereich (118a, 120a) steht und eine Bewegungskopplung zwischen dem ersten Schaltorgan (50a) und dem Rückstellelement (92a) hergestellt ist.

17. Getriebebetätigungsmechanismus nach Anspruch 16,
**dadurch gekennzeichnet, dass** das erste Schaltorgan (50a) durch Bewegen im ersten Bewegungsmodus in eine Kopplungsstellung bewegbar ist, wobei bei in einer Kopplungsstellung positioniertem ersten Schaltorgan (50a) dieses nicht in einer Wechselwirkungsstellung ist, und dass bei Bewegen des in einer Kopplungsstellung positionierten ersten Schaltorgans (50a) im zweiten Bewegungsmodus das Rückstellelement (92a) zur Durchführung einer Rückstellbewegung bewegt wird.

18. Getriebebetätigungsmechanismus nach Anspruch 11 und einem der Ansprüche 13 bis 17,
**dadurch gekennzeichnet, dass** das Rückstellelement (92a) zur Durchführung einer Rückstellbewegung um eine Drehachse (L_{Ü}) der Übertragungswelle (52a) verschwenkbar ist.

19. Getriebebetätigungsmechanismus nach Anspruch 15 und Anspruch 18,
**dadurch gekennzeichnet, dass** bei Durchführung einer Rückstellbewegung der erste Rückstellbereich (110a) des Rückstellelements (92a) mit einem ersten Hebelabschnitt (124a) von Schwenkelementen (H₁ - H₄) zusammenwirkt und der zweite Rückstellbereich (112a) mit einem zweiten Hebelabschnitt (122a) derselben zusammenwirkt.

20. Getriebebetätigungsmechanismus nach einem der Ansprüche 12 bis 19,
**dadurch gekennzeichnet, dass** die zweiten Schaltorgane (H₁ - H₄) in einer Mehrzahl von Schaltstellungen positionierbar sind, von welchen eine Schaltstellung einer Neutralstellung einer durch ein jeweiliges zweites Schaltorgan (H₁ - H₄) zu betätigenden Getriebesynchronisiervorrichtung entspricht, und dass die vorbestimmte Schaltstellung die eine Schaltstellung ist.

21. Verfahren zum Beseitigen einer Fehlpositionierung eines zweiten Schaltorgans (S₁ - S₄; H₁ - H₄) eines Getriebebetätigungsmechanismus (40; 40a) nach einem der vorangehenden Ansprüche, umfassend die folgenden Maßnahmen:
a) Bewegen des ersten Schaltorgans (22; 50a) im ersten Bewegungsmodus in eine Stellung, in welcher der erste Wechselwirkungsbereich (26; 26a) mit keinem der zweiten Wechselwirkungsbereiche (28; 28a) in einer Wechselwirkungsstellung ist;
b) Bewegen des ersten Schaltorgans (22; 50a) im zweiten Bewegungsmodus in eine Stellung, in welcher ein darauf folgendes Bewegen des ersten Schaltorgans (22; 22a) im ersten Bewegungsmodus in eine Behelfs-Wechselwirkungsstellung möglich ist, in welcher Behelfs-Wechselwirkungsstellung der erste Wechselwirkungsbereich (22; 50a) bei nachfolgendem Bewegen im zweiten Bewegungsmodus an dem fehlpositionierten zweiten Schaltorgan (S₁ - S₄ ; H₁ - H₄) oder/und dem zweiten Wechselwirkungsbereich (28; 28a) desselben angreifen kann;
c) Bewegen des ersten Schaltorgans (22; 50a) im ersten Bewegungsmodus in die Behelfs-Wechselwirkungsstellung;
d) Bewegen des ersten Schaltorgans im zweiten Bewegungsmodus und dabei Bewegen des fehlpositionierten zweiten Schaltorgans (S₁ S₄; H₁ - H₄).
